(19)

**Europäisches Patentamt**
**European Patent Office**
**Office européen des brevets**

(11) **EP 3 950 619 A2**

(12) **EUROPÄISCHE PATENTANMELDUNG**

(43) Veröffentlichungstag:
**09.02.2022 Patentblatt 2022/06**

(21) Anmeldenummer: **21191640.8**

(22) Anmeldetag: **17.08.2021**

(51) Internationale Patentklassifikation (IPC):
**C03C 3/118** (2006.01)    **C03C 4/00** (2006.01)

(52) Gemeinsame Patentklassifikation (CPC):
**C03C 3/118; C03C 4/0085**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **03.12.2020 EP 20211681**

(71) Anmelder: **Schott AG**
**55122 Mainz (DE)**

(72) Erfinder:
• **Krüger, Dr. Susanne**
**55127 Mainz (DE)**
• **Hochrein, Dr. Oliver**
**55130 Mainz (DE)**
• **Grimm, Dr. Malte**
**95666 Mitterteich (DE)**
• **Eichholz, Rainer Erwin**
**60323 Frankfurt am Main (DE)**
• **Wölzlein, Brigitte**
**91746 Weidenbach (DE)**
• **Naumann, Dr. Katrin**
**55270 Ober-Olm (DE)**

(74) Vertreter: **Fuchs Patentanwälte Partnerschaft mbB**
**Westhafenplatz 1**
**60327 Frankfurt am Main (DE)**

(54) **BOROSILICATGLASARTIKEL**

(57)    Die vorliegende Erfindung betrifft ein Glas mit hoher UV-Transmission, vorteilhaften Eigenschaften hinsichtlich Entmischung und guten Fügeeigenschaften beim Verschmelzen. Die Erfindung betrifft auch die Verwendung dieses Glases, insbesondere UV-LED, UV-durchlässige Lampen, Schutzrohre für UV-Lampen, UV-durchlässiges Material für UV-Oxidationsreaktoren, UV-Flammendetektoren, UV-Photozellen, Sonnenreaktoren, Spektralanalysegeräte, Fotomultiplier und für Fenster (insbesondere EPROM-Fenster), Abdeckscheiben für Solarzellen (z. B. im Weltraum) und/oder UV-transparente Küvetten (z. B. für Photolumineszenzmessungen mit UV-Anregung), Glasfluss für Emaille-Beschichtungen, UV-transparente Schicht, UV-transparente Formkörper, Mikrofluidikbauteil (z. B. für photolumineszenz-basierte Diagnostikverfahren), UV-CCL (cold cathode lamps) und/oder Xenon-Blitzlampen.

FIG. 1

EP 3 950 619 A2

**Beschreibung**

Die vorliegende Erfindung betrifft Artikel aus Borosilicatglas mit hoher UV-Transmission, vorteilhaften Eigenschaften hinsichtlich Entmischung und guten Fügeeigenschaften beim Verschmelzen. Die Erfindung betrifft auch die Verwendung dieses Glases, insbesondere in UV-Lampen und Photomultipliern.

Im Stand der Technik sind neben Quarzgläsern auch Alkali-Borosilicatgläser bekannt, die ebenfalls eine hohe UV-Transmission aufweisen und dabei leichter schmelzbar sind. Nachteile gegenüber dem Quarzglas bestehen darin, dass diese hochborhaltigen Gläser stark zu Entmischung neigen. Entmischung bedeutet, dass sich neben einer Silicatglasphase eine Alkali- oder Erdalkaliboratphase in dem Glas bildet. Diese kann neben einem durch Verdampfung verursachten Knotenausfall während der Produktion auch zu einer Verringerung der Transmission im UV-Bereich führen. Weiterhin führt Entmischung zu einer Verschlechterung der hydrolytischen Beständigkeit der Gläser.

Eine Erniedrigung des Boroxidgehaltes wurde daher im Stand der Technik in Betracht gezogen, um diesen Problemen zu begegnen. Um jedoch eine ähnliche Schmelzbarkeit trotz verringerten Borgehalts zu gewährleisten, muss der Anteil an Alkalien und Erdalkalien erhöht werden, was sich als problematisch hinsichtlich der angestrebten UV-Transmission erweist. Ein Glas für die vorgesehenen Anwendungen soll gute Fügeeigenschaften sowohl mit metallischen Werkstoffen als auch mit anderen UV-transparenten Gläsern aufweisen.

DE 10 2009 036 063 B3 beschreibt Gläser mit verringertem Boroxidgehalt gegenüber früheren Gläsern, aber trotzdem mit hoher UV-Transmission. Dies wurde durch die Erhöhung des Gehalts an $SiO_2$, $Li_2O$, $K_2O$ und $BaO$ erreicht. Lithium- und Kaliumoxid sind in der Literatur dafür bekannt, dass sie im Gegensatz zu Natriumoxid eine Verschiebung der UV-Kante zu niedrigeren Wellenlängen zur Folge haben. Lithiumoxid neigt aber zu Verdampfung und erhöht außerdem den Gemengepreis. Die Erhöhung des Kaliumoxidgehalts hingegen führt durch die Strahlung seines Isotops $^{40}K$ zu einem Glas, das beim Einsatz in Photomultipliern störend wirkt.

Die DE 43 38 128 C1 beschreibt Gläser mit geringem Boroxidgehalt und sehr hohem Siliziumdioxidgehalt. Dies erhöht die Verarbeitungstemperaturen und führt zu einem sehr geringen thermischen Ausdehnungskoeffizienten (< 3,5 ppm/K).

JP 2015-193521 A zeigt ebenfalls Glaszusammensetzungen mit sehr geringem Boroxidgehalt. Jedoch führt die Erhöhung der Alkalien, insbesondere des Natriumoxids zu einer Verringerung der UV-Transmission, insbesondere bei 200 nm (< 30%). Des Weiteren führt die Erhöhung des Natriumoxidgehalts zu einem thermischen Ausdehnungskoeffizienten (> 5 ppm/K), der bei der Verschmelzung des Glases mit anderen UV-transparenten Gläsern vermutlich in einer hohen Verschmelzspannung resultiert. JP 2018-131384 A und JP 2018-131385 A beschreiben Gläser mit geringem Boroxidgehalt, jedoch erniedrigter Transmission im UV-Bereich (< 30% bei 200 nm für eine 0,7 mm dicke Probe) und einem erhöhten thermischen Ausdehnungskoeffizienten (> 6,5 ppm/K) aufgrund eines hohen Natriumoxidgehalts.

Die in US 7,358,206 B2 beschriebenen Gläser mit geringem Boroxidgehalt beinhalten so viel Kaliumoxid (> 7,5 mol%), dass der Einsatz in Photomultipliern erheblich erschwert ist. Der hohe Anteil an Fluor führt bei diesen Gläsern zu der guten UV-Transmission (50% für eine 1 mm dicke Probe) bei ≤ 200 nm, aber auch zu einer stärkeren Entmischungsneigung und einer verringerten hydrolytischen Beständigkeit. Eine Erniedrigung des Boroxidgehalts bei geringem Aluminiumoxidgehalt hat eine Erniedrigung der UV-Transmission (< 80% bei 254 nm für eine 0,5 mm dicke Probe) zur Folge. Dies wird in US 2018/0057393 A1 deutlich, insbesondere in den Beispielen 17, 26 und 41. Des Weiteren zeigt sich deutlich, wie sich der thermische Ausdehnungskoeffizient erhöht, wenn viel Natriumoxid eingesetzt wird.

Die Gläser in JP S60-200842 A zeigen aufgrund eines verringerten Boroxidgehalts und eines hohen Alkalianteils eine geringe UV-Transmission (≤ 80% @ 350 nm, d. h. die Transmission bei niedrigeren Wellenlängen ist noch kleiner).

In JP S60-021830 A werden Gläser mit höherem Boroxid- und Aluminiumoxidgehalt, aber auch sehr hohem Alkaligehalt beschrieben. Aus den Beispielen wird ersichtlich, dass dies zu hohen thermischen Ausdehnungskoeffizienten (≥ 5 ppm/K) führt. Die hohen Alkaligehalte resultieren überwiegend in Transmissionen von < 80 % bei 253,7 nm für eine 1 mm dicke Probe.

In US 5,277,946 A werden Gläser mit sehr geringem Boroxidgehalt beschrieben, es handelt sich eher um Alumoborosilicat- als um Borosilicatgläser. Diese weisen eine sehr gute UV-Transmission (> 80% bei 253,7 nm für eine 1 mm dicke Probe) auf, zeigen jedoch aufgrund eines hohen Natriumoxidgehalts einen hohen thermischen Ausdehnungskoeffizienten (> 5 ppm/K).

CN 104591539 A zeigt, dass eine hohe UV-Transmission (> 40% bei 190 nm und > 80% bei 254 nm für eine 1 mm dicke Probe) erreicht werden kann, wenn in den Gläsern hohe Boroxidaber eher geringe Aluminiumoxidgehalte eingesetzt werden, die durch Alkalien kompensiert werden. Der Einsatz von ausschließlich Alkalien führt jedoch zu hohen thermischen Ausdehnungskoeffizienten. Des Weiteren werden solche Glaszusammensetzungen keine gute hydrolytische Beständigkeit zeigen.

Die US 2018/0339932 A1 beschreibt Alumoborosilicatgläser mit sehr niedrigen Boroxidgehalten, aber hohen Anteilen an Aluminiumoxid und Erdalkalien. Dies hat einen sehr geringen thermischen Ausdehnungskoeffizienten (< 3,5 ppm/K) zur Folge.

Eine Aufgabe der vorliegenden Erfindung ist es also die Nachteile aus dem Stand der Technik zu überwinden.

Insbesondere sollen Gläser bereitgestellt werden, die eine hohe UV-Transmission aufweisen und leicht schmelzbar sind. Die Gläser sollen zudem ein gutes Entmischungsverhalten und eine gute hydrolytische Beständigkeit aufweisen. Außerdem sollen die Gläser eine niedrige Verschmelzspannung sowohl mit metallischen Werkstoffen als auch mit anderen UV-transparenten Gläsern aufweisen.

Beschreibung der Erfindung

Die Erfindung betrifft ein in mehrfacher Hinsicht resistentes Glas und daraus bestehende Glasartikel. Es hat eine hohe hydrolytische Beständigkeit, die sich auch nach dem Verschmelzen mit einem Fügepartner kaum verändert. Darüber hinaus behält das Glas seine hohe Transmission auch nach Bestrahlung mit UV-Strahlung über einen längeren Zeitraum. Auch hat das Glas nur eine geringe Neigung zur Entmischung.

In einem ersten Aspekt betrifft die Erfindung einen Glasartikel aus einem Glas mit einem Entmischungsfaktor hinsichtlich seiner hydrolytischen Beständigkeit im Bereich von 0,1 bis 1,65, oder von 0,2 bis 1,65, oder von 0,35 bis 1,65, insbesondere von 0,7 bis 1,10. Insbesondere ist der Entmischungsfaktor mindestens 0,1, oder mindestens 0,2, oder mindestens 0,35, oder mindestens 0,40 oder mindestens 0,70.

Der Entmischungsfaktor ist ein Maß für die Eigenschaft des Glases, seine hydrolytische Beständigkeit im Sinne der ISO 719 in Folge einer Entmischung zu verändern. Entmischung tritt beim Verschmelzen der Gläser aufgrund des Temperatureinflusses zu einem gewissen Grad auf. Gläser mit einem Entmischungsfaktor möglichst nahe 1 haben den Vorteil, dass deren hydrolytische Beständigkeit nach Entmischung kaum von der des nicht entmischten Glases abweicht. Der Entmischungsfaktor wird durch die Zusammensetzung des Glases beeinflusst, aber auch durch seine thermische Vorgeschichte (Kühlzustand). Optional beträgt der Entmischungsfaktor hinsichtlich der hydrolytischen Beständigkeit 0,40 bis 1,65 oder wenigstens 0,65. In einer Ausführungsform ist der Entmischungsfaktor bis zu 1,4, bis zu 1,25 oder bis zu 1,10.

In einer Ausführungsform ist der Entmischungsfaktor mindestens 0,70 und bis zu 1,6. In einer weiteren Ausführungsform ist der Entmischungsfaktor mindestens 0,3 und bis zu 0,5.

In einem zweiten Aspekt betrifft die Erfindung einen Glasartikel aus einem Glas mit einem Anteilsverhältnis in Mol% von $B_2O_3$ zu BaO von mindestens 8 und höchstens 20, insbesondere mindestens 10 und höchstens 15. Gläser mit dem genannten Anteilsverhältnis zeigen gute Eigenschaften hinsichtlich der hydrolytischen Beständigkeit und dem Entmischungsfaktor und sie haben eine nur geringe induzierte Extinktion, was besonders bei Verwendung als UV-durchlässiges Material viele Vorteile hat.

In einem dritten Aspekt betrifft die Erfindung einen Glasartikel aus einem Glas mit einem $R_2O$-Gehalt von höchstens 7 Mol%, einer Transmission von mindestens 83% bei 254 nm (gemessen bei einer Probendicke von 1 mm) und von mindestens 40% bei 200 nm (gemessen bei einer Probendicke von 1 mm), wobei der Glasartikel eine Verschmelzspannung mit einem Metall oder einer Metalllegierung mit einem thermischen Ausdehnungskoeffizienten von 5,4 ppm/K im Bereich von -400 bis -130 nm/cm und/oder mit einem Glas mit einem thermischen Ausdehnungskoeffizienten von 5,0 ppm/K im Bereich von >0 bis 300 nm/cm aufweist.

Die Glasartikel können zum Verschmelzen mit einem weiteren Fügepartner verwendet werden. Dabei werden die Fügepartner auf eine Verschmelztemperatur erhitzt und miteinander verbunden. Beim anschließenden Abkühlen schrumpfen die miteinander verbundenen Teile unterschiedlich stark. Es ist erstaunlich, dass mit den Glasartikeln der Erfindung nur eine vergleichsweise geringe Spannung beim Verbinden mit einem Metall oder einer Metalllegierung beobachtet wird, obwohl der CTE des Metalls wesentlich höher ist als der des Glasartikels. Es ist weiter höchst erstaunlich, dass sich eine verhältnismäßig geringe Spannung beim Verschmelzen mit Glas ergibt. Es wurde gefunden, dass die Verschmelzspannung vorzugsweise nicht unter -400 nm/cm sinken sollte. Wird der Betrag der Verschmelzspannung zu groß, bauen sich große Spannungen im verschmolzenen Artikel auf und es kann zu einem Bruch der Verbindung kommen.

In einem vierten Aspekt betrifft die Erfindung einen Glasartikel aus einem Glas mit einer induzierten Extinktion $\alpha(\lambda)$ nach 48 Stunden Bestrahlung mit einer Deuteriumlampe bei 200 nm von maximal 0,300. Die induzierte Extinktion drückt aus, wie stark die Extinktion und damit die Transmission eines Glases durch Bestrahlung verändert wird. Typischerweise sinkt die Transmission durch UV-Bestrahlung (induzierte Extinktion ist positiv). Man spricht auch von "Solarisation". Eine zu große induzierte Extinktion führt zu einer kurzen Verwendungsdauer der Glasartikel bzw. zu einer schnell sinkenden Transmission unter Bestrahlung.

In einem fünften Aspekt betrifft die Erfindung einen Glasartikel aus einem Glas mit einem Verhältnis der Summe der Gehalte (in Mol%) von $B_2O_3$, $R_2O$ und RO zu der Summe der Gehalte (in Mol%) von $SiO_2$ und $Al_2O_3$ von wenigstens 0,1 und maximal 0,4. Gläser mit dem genannten Anteilsverhältnis zeigen gute Eigenschaften hinsichtlich der hydrolytischen Beständigkeit und dem Entmischungsfaktor und sie haben eine nur geringe induzierte Extinktion, was besonders bei Verwendung als UV-durchlässiges Material viele Vorteile hat.

Mit "$R_2O$" sind die Alkalimetalloxide $Li_2O$, $Na_2O$ und $K_2O$ gemeint. "RO" bezeichnet die Erdalkalimetalloxide MgO, CaO, BaO und SrO.

Der "thermische Ausdehnungskoeffizient" oder "CTE" ist der mittlere lineare thermische Ausdehnungskoeffizient in einem Temperaturbereich von 20 °C bis 300 °C. Er wird bestimmt gemäß DIN ISO 7991:1987.

Der "Entmischungsfaktor hinsichtlich der hydrolytischen Beständigkeit" wird wie folgt berechnet:

$$E - Faktor = \frac{Equ_{roh}}{Equ_{ent}}$$

Darin sind $Equ_{roh}$ und $Equ_{ent}$ das extrahierte $Na_2O$-Äquivalent in $\mu g$ pro g Glas für das rohe, also nicht entmischte Glas, bzw. für das entmischte Glas. Das extrahierte $Na_2O$-Äquivalent wird nach ISO 719:1989-12 bestimmt. Der Entmischungsfaktor ist eine Eigenschaft des Glases. Die Angabe dieses Faktors bedeutet nicht, dass das Glas entmischt ist, sondern dass im Falle einer Entmischung die veränderte hydrolytische Beständigkeit im Test nach ISO 719 in einem bestimmten Rahmen liegt. Jedes Glas kann hinsichtlich seines Entmischungsfaktors untersucht werden. Dafür wird an dem nicht entmischten Glas das extrahierte $Na_2O$-Äquivalent nach ISO 719 bestimmt ($Equ_{roh}$). Die gleiche Messung wird an einem entmischten Glas durchgeführt ($Equ_{ent}$). "Entmischtes Glas" ist ein Glas, das für 4 Stunden bei 100 °C über der Glastransformationstemperatur $T_g$ gehalten wurde. Bei dieser Temperaturbehandlung tritt ein gewisses Maß an Entmischung ein.

"Verschmelzspannung" ist diejenige Spannung (Zug- oder Druckspannung), die sich an der Fügefläche zwischen zwei verschmolzenen Bauteilen bei Raumtemperatur einstellt. Ein negatives Vorzeichen bedeutet eine Druckspannung, ein positives Vorzeichen eine Zugspannung. Die Verschmelzspannung kann gemäß DIN 52327:1977-11 bestimmt werden, wobei der Teil 1 der Norm für die Verschmelzspannung von Glas mit Glas und der Teil 2 für die von Glas mit Metall oder Metalllegierung maßgeblich ist. In dieser Beschreibung wird die Verschmelzspannung u.a. auch indirekt in Form der Spannungsdoppelbrechung $\Delta n$, die sich aus dem Quotienten des optischen Wegunterschieds $\Delta s$ zur Probendicke d ergibt, in nm/cm angegeben. Diese Spannungsdoppelbrechung ist proportional zur eigentlichen Verschmelzspannung, die sich in der Nähe der Verschmelzungsfläche (z. B. mit einem Abstand 0,5 mm) nach folgender Gleichung berechnen lässt:

$$\sigma = \frac{\Delta s}{d \cdot K} = \frac{\Delta n}{K}$$

Darin sind $\sigma$ die eigentliche Verschmelzspannung und K ist der spannungsoptische Koeffizient. Wird in dieser Beschreibung für den Glasartikel eine Verschmelzspannung des Artikels mit einem Fügepartner aus Glas in nm/cm angegeben, so betrifft diese die Spannungsdoppelbrechung in dem Fügepartner (z. B. in einem Abstand von 0,5 mm von der Fügefläche).

"$T_4$" ist die Temperatur, bei der das Glas eine Viskosität von $10^4$ dPa s aufweist. $T_4$ kann nach den dem Fachmann bekannten Methoden zur Viskositätsbestimmung von Glas gemessen werden, z. B. nach DIN ISO 7884-1:1998-02. "$T_{13}$" ist die Temperatur, bei der das Glas eine Viskosität von $10^{13}$ dPa s aufweist.

Der "Referenzbrechungsindex" ist der Brechungsindex, den ein Glas annimmt, wenn es besonders langsam gekühlt wurde. Es weist dann eine besonders dichte Struktur auf. Wird ein Glas schnell abgekühlt, hat es einen Brechungsindex, der geringer ist als der Referenzbrechungsindex. Der Referenzbrechungsindex wird ermittelt, indem das Borosilicatglas nach der Herstellung erneut auf eine Temperatur erwärmt wird, die $0,85 * T_{13}$ (in K) entspricht, dort für 22 Stunden gehalten und sodann mit einer Kühlrate von 2 K/h auf eine Temperatur von 20 °C abgekühlt wird. Danach wird der Brechungsindex (= Referenzbrechungsindex) gemessen und die Differenz zum Brechungsindex vor dieser erneuten Abkühlung festgestellt. In den bevorzugten Ausführungsformen liegt $T_{13}$ des Borosilicatglases bei unter 550 °C.

"Solarisation" ist die durch Einwirkung von kurzwelligem UV-Licht hervorgerufene Verminderung der Transmission für Licht verschiedener Wellenlängenbereiche. Durch Solarisation kann das Glas gefärbt oder vollständig undurchlässig werden.

Die "Solarisationsresistenz" ist die Eigenschaft des Glases, eine hohe Transmission bei einer bestimmten Wellenlänge auch nach UV-Bestrahlung zu erhalten. Sie kann über die Berechnung der induzierten Extinktion $\alpha(\lambda)$ beschrieben werden

$$\alpha(\lambda) = -\ln \frac{T(\lambda)_i}{T(\lambda)_0}$$

mit $T(\lambda)_0$ = Transmission vor Bestrahlung und $T(\lambda)_i$ = Transmission nach i Stunden Bestrahlung mit einer Deuteriumlampe. Je kleiner $\alpha(\lambda)$ ist, desto resistenter ist das Glas gegen die Solarisation. Die Solarisationsresistenz wird hierin für die Wellenlängen 200 nm und 254 nm angegeben, da diese Wellenlängen für die Anwendung des Glasartikels besondere Bedeutung haben. Für die Angabe der Solarisationsresistenz wird in dieser Beschreibung von einer Probendicke von etwa 0,70 mm bis 0,75 mm ausgegangen. Das bedeutet, dass die Messung bei dieser Probendicke stattfindet. Der Glasartikel selbst kann eine andere Dicke haben. Die Bestrahlung erfolgt mit einer Deuteriumlampe. Deuteriumlampen geben Licht bis in einen sehr kurzwelligen UV-Bereich ab. Die hier verwendete Lampe hat eine Grenzwellenlänge von 115 nm. Die Leistung der Deuteriumlampe kann bei ca. 1 W/m$^2$ liegen. Es kann folgende Deuteriumlampe eingesetzt werden: Heraeus Noblelight GmbH, Typ V04, S-Nr.: V0390 30 W, mit MgF$_2$-Filter für ausreichende Emission bis 115 nm.

Die "hydrolytische Klasse" wird nach ISO 719:1989-12 bestimmt. Sie ist ein Maß für die Extrahierbarkeit basischer Verbindungen aus dem Glas in Wasser bei 98 °C. Ergebnis der Messung ist das extrahierte Na$_2$O-Äquivalent in $\mu$g pro g Glas. Bis 31 $\mu$g/g wird die Klasse HGB1 vergeben, bis 62 $\mu$g/g die Klasse HGB2 und bis 264 $\mu$g/g die Klasse HGB3.

Die nachfolgend beschriebenen Merkmale und vorteilhaften Eigenschaften treffen gleichermaßen auf die oben beschriebenen Erfindungsaspekte zu. Das hierin beschriebene Glas bzw. Borosilicatglas ist das Glas, aus dem der Glasartikel besteht. Der Glasartikel kann ein Stab, Barren, Pulver, eine Scheibe, Platte oder ein Rohr sein.

Die Dicke des Artikels, insbesondere die Wanddicke im Falle eines Rohres, kann wenigstens 0,1 mm betragen oder wenigstens 0,3 mm. Die Dicke kann auf bis zu 3 mm oder bis zu 2 mm begrenzt sein. Der Außendurchmesser des Glasartikels, z. B. der Außendurchmesser eines Rohres oder Stabes, kann bis zu 50 mm, bis zu 40 mm oder bis zu 30 mm betragen. Der Außendurchmesser kann insbesondere wenigstens 1 mm, wenigstens 2 mm oder wenigstens 3 mm betragen. In einer Ausführungsform weist der Artikel eine Dicke auf, die wenigstens 3 mm und/oder höchstens 20 mm beträgt. Optional beträgt die Dicke wenigstens 5 mm, wenigstens 6 mm oder wenigstens 8 mm. Die Dicke kann auf maximal 20 mm, bis zu 16 mm, bis zu 14 mm oder bis zu 12 mm begrenzt sein. In einer Ausführungsform weist der Artikel eine Länge und eine Breite auf, wobei insbesondere die Länge größer ist als die Breite. Die Länge kann wenigstens 20 mm, wenigstens 40 mm oder wenigstens 60 mm betragen. Optional beträgt sie höchstens 1000 mm, höchstens 600 mm, höchstens 250 mm oder höchstens 120 mm. Vorzugsweise beträgt die Länge von 20 mm bis 1000 mm, von 40 mm bis 600 mm oder von 60 mm bis 250 mm. Die Breite kann wenigstens 10 mm, wenigstens 25 mm oder wenigstens 35 mm betragen. Optional beträgt die Breite höchstens 575 mm, höchstens 225 mm oder höchstens 110 mm. Vorzugsweise beträgt die Breite von 10 mm bis 575 mm, von 25 mm bis 225 mm oder von 35 mm bis 110 mm.

Es wurde gefunden, dass ein Glas mit einem Brechungsindex von wenigstens 0,0001 unterhalb seines Referenzbrechungsindex - und damit auch mit einer Dichte unterhalb seiner Referenzdichte - eine geringere Verschmelzspannung aufweisen kann als dasselbe Glas mit höherer Dichte. Es wird vermutet, dass ein solches Glas nach dem Verschmelzen mit einem Fügepartner aus Metall oder Glas aufgrund seiner höheren fiktiven Temperatur stärker schrumpft als ein Glas, das eine niedrigere fiktive Temperatur aufweist. Die üblichen Fügepartner haben thermische Ausdehnungskoeffizienten, die oberhalb von 4,5 ppm/K liegen, so dass sie nach dem Verschmelzen stärker schrumpfen als der Glasartikel der Erfindung. Dadurch entstünde eine starke Spannung an der Fügefläche.

In einer Ausführungsform weist das Borosilicatglas einen Kühlzustand auf, der einer Kühlrate von deutlich mehr als 2 K/h entspricht. Das Borosilicatglas kann so schnell abgekühlt werden, dass es eine vergleichsweise hohe fiktive Temperatur aufweist. Eine hohe fiktive Temperatur geht einher mit einer Dichte, die geringer ist als eine Referenzdichte derselben Glaszusammensetzung. Das Borosilicatglas kann eine Dichte von weniger als 2,5 g/cm$^3$ aufweisen. Die Dichte korreliert mit dem Brechungsindex, so dass das Maß einer Dichteänderung an dem Artikel durch Messung der Änderung des Brechungsindex erfolgen kann. Bei der Referenzdichte hat das Glas seinen Referenzbrechungsindex. In einer Ausführungsform hat das Borosilicatglas einen Brechungsindex $n_d$ von 1,45 bis 1,55. Erfindungsgemäß bevorzugt ist ein Borosilicatglas mit einem Brechungsindex, der um wenigstens 0,0001 gegenüber seinem Referenzbrechungsindex verringert ist. Bevorzugt ist der Brechungsindex des Glases sogar um wenigstens 0,0004, besonders bevorzugt wenigstens 0,0006 kleiner als der Referenzbrechungsindex des Glases. Allerdings sollte der durch die höhere fiktive Temperatur nach der Verschmelzung verursachte thermische Schrumpf nicht zu groß sein, da andernfalls zu große Spannungen an der Fügefläche eintreten können. Somit kann die Verringerung des Brechungsindex gegenüber dem Referenzbrechungsindex auf maximal 0,1, insbesondere maximal 0,01 oder maximal 0,001 beschränkt sein.

Der thermische Schrumpf kann für das Glas dieser Erfindung weniger als 50 $\mu$m/100 mm betragen. In einer bevorzugten Ausführungsform beträgt der thermische Schrumpf weniger als 30 $\mu$m/100 mm oder weniger als 20 $\mu$m/100 mm. Der thermische Schrumpf kann wenigstens 1 $\mu$m/100 mm betragen oder wenigstens 5 $\mu$m/100 mm. Zwar lässt sich ein extrem geringer thermischer Schrumpf auch erreichen. Die dafür erforderliche sehr langsame Abkühlung ist aber nicht wirtschaftlich. Der thermische Schrumpf des Glases kann gemessen werden, indem ein zuvor genau vermessener Glasartikel bei einer Temperatur von 0,85 * $T_{13}$ (in K) für 22 Stunden gehalten, danach mit einer Kühlrate von 2 K/h auf 20 °C abgekühlt und anschließend abermals vermessen wird. Der Vergleich der Ausdehnung des Glasartikels vor und nach der Wärmebehandlung ergibt den thermischen Schrumpf. Bevorzugt wird die Ausdehnung entlang der längsten Ausdehnung des Glasartikels, z. B. entlang der Längsachse gemessen. Beispielsweise kann ein Prüfkörper von 5,8 mm Kantenlänge eines quadratischen Querschnitts und einer Länge von 100 mm verwendet werden.

Das Glas und/oder der Glasartikel hat vorzugsweise eine Transmission von mindestens 50%, besser mindestens 70%, mindestens 80% oder mindestens 83% bei einer Wellenlänge von 254 nm. Diese Transmission ist vorteilhaft für die Anwendung des Glasartikels in einer UV-Lampe. Je größer die Transmission im UV, desto effizienter ist die Lampe. In einer Ausführungsform beträgt die Transmission bei 254 nm höchstens 99,9%, höchstens 95% oder höchstens 90%. Die Transmission wird insbesondere bei einer Probendicke von 1 mm gemessen. Dies bedeutet nicht unbedingt, dass der Glasartikel eine Dicke von 1 mm hat, sondern dass die Transmission bei dieser Dicke gemessen wird. Bevorzugt gelten die angegebenen Transmissionswerte auch nach Bestrahlung mit einer Deuteriumlampe für eine Dauer von 48 Stunden und/oder 96 Stunden. Es kann folgende Deuteriumlampe eingesetzt werden: Heraeus Noblelight GmbH, Typ V04, S-Nr.: V0390 30 W, mit $MgF_2$-Filter für ausreichende Emission bis 115 nm.

Das Glas und/oder der Glasartikel hat vorzugsweise eine Transmission von mindestens 40%, besser mindestens 50%, mindestens 55% oder mindestens 60% bei einer Wellenlänge von 200 nm. Diese Transmission ist z. B. vorteilhaft für die Anwendung des Glasartikels in einer UV-Lampe. Je größer die Transmission im UV, desto effizienter ist die Lampe. In einer Ausführungsform beträgt die Transmission bei 200 nm höchstens 95%, höchstens 85% oder höchstens 70%. Die Transmission wird insbesondere bei einer Probendicke von 1 mm gemessen. Dies bedeutet nicht unbedingt, dass der Glasartikel eine Dicke von 1 mm hat, sondern dass die Transmission bei dieser Dicke gemessen wird. Bevorzugt gelten die angegebenen Transmissionswerte auch nach Bestrahlung mit einer Deuteriumlampe für eine Dauer von 48 Stunden und/oder 96 Stunden. Es kann z. B. die bereits zuvor genannte Deuteriumlampe eingesetzt werden.

Für viele Anwendungen ist eine möglichst gleichmäßige Transmission im UV-Bereich wünschenswert. Die Gläser dieser Erfindung weisen ein Verhältnis der Transmission bei 254 nm zu der Transmission bei 200 nm (jeweils gemessen bei einer Probendicke von 1 mm) von mindestens 1,00 und höchstens 2,00, insbesondere höchstens 1,65 oder höchstens 1,50 auf.

Das Glas weist vorzugsweise eine induzierte Extinktion $\alpha(\lambda)$ von maximal 0,300 bei 200 nm nach 48 Stunden Bestrahlung mit einer Deuteriumlampe auf. Die induzierte Extinktion ist ein Maß für die Solarisationstendenz eines Glases. Je größer die induzierte Extinktion eines Glases, umso stärker nimmt die Transmission in Folge von UV-Bestrahlung ab. Für die Gläser dieser Erfindung ist eine hohe UV-Durchlässigkeit wichtig. Eine bevorzugte geringe induzierte Extinktion bei 200 nm nach 48 Stunden Bestrahlung mit einer Deuteriumlampe beträgt maximal 0,300, maximal 0,200 oder maximal 0,100, bevorzugt maximal 0,05. Besonders bevorzugt wird diese maximale induzierte Extinktion auch nach Bestrahlung für 96 Stunden mit einer Deuteriumlampe nicht überschritten.

Auch bei größeren Wellenlängen im UV-Bereich sollte die induzierte Extinktion gering sein. In bevorzugten Ausführungsformen beträgt die induzierte Extinktion bei 254 nm nach 48 Stunden Bestrahlung mit einer Deuteriumlampe maximal 0,100, bevorzugt maximal 0,01. Vorzugsweise wird dieser Wert auch nach Bestrahlung für 96 Stunden mit einer Deuteriumlampe nicht überschritten. Eine gewisse induzierte Extinktion bei 254 nm oder bei 200 nm kann allerdings auch bei den Gläsern dieser Erfindung auftreten, z. B. ab 0,0001 oder ab 0,001, nach Bestrahlung mit einer Deuteriumlampe für 48 Stunden oder 96 Stunden.

Der Glasartikel eignet sich besonders zum Verschmelzen mit Metallen, Metalllegierungen und Gläsern. Insbesondere kann der Glasartikel zum Verschmelzen mit Materialien verwendet werden, die einen höheren thermischen Ausdehnungskoeffizienten haben als der Glasartikel, z. B. einen CTE von > 4,6 ppm/K, oder > 4,9 ppm/K. Der Glasartikel kann eine Verschmelzspannung gegen ein Metall oder eine Metalllegierung mit einem thermischen Ausdehnungskoeffizienten von 5,4 ppm/K von mehr als -500 nm/cm aufweisen, insbesondere mehr als -400 nm/cm oder mehr als -300 nm/cm. In vorteilhaften Ausführungsformen beträgt die Verschmelzspannung maximal 0 nm/cm oder maximal -130 nm/cm. Mit "mehr als" ist hierbei gemeint, dass ein negativer Wert weniger negativ ist. "Mehr als -500 nm/cm" umfasst also z. B. -490 nm/cm.

Der Glasartikel kann eine Verschmelzspannung gegen ein Glas mit einem thermischen Ausdehnungskoeffizienten von 5,0 ppm/K von weniger als 300 nm/cm aufweisen, insbesondere weniger als 250 nm/cm oder weniger als 180 nm/cm. In vorteilhaften Ausführungsformen beträgt diese Verschmelzspannung wenigstens 0 nm/cm oder wenigstens 90 nm/cm. Es ist vorteilhaft, die Verschmelzspannung in Grenzen zu halten, da so bessere Fügeverbindungen erhalten werden. Grundsätzlich ist eine Druckspannung (negatives Vorzeichen) gegenüber einer Zugspannung (positives Vorzeichen) zu bevorzugen, damit das Glas nicht beschädigt wird. Wenn hierin beschrieben wird, dass der Glasartikel eine bestimmte Verschmelzspannung aufweist, so ist damit gemeint, dass der Artikel im Falle seiner Verschmelzung diese Eigenschaft haben wird. Das bedeutet nicht, dass der Fügepartner ein Teil des Glasartikels ist.

Das Glas ist vorzugsweise ein Borosilicatglas. In einer Ausführungsform umfasst das Borosilicatglas die folgenden Komponenten (in Mol% auf Oxidbasis):

| Komponente | Gehalt (Mol%) |
|---|---|
| $SiO_2$ | 60-78 |
| $Al_2O_3$ | 0-10 |

(fortgesetzt)

| Komponente | Gehalt (Mol%) |
|---|---|
| $B_2O_3$ | 12-24 |
| $Li_2O$ | 0 bis 3,0 |
| $Na_2O$ | 0-6 |
| $K_2O$ | 0-4 |
| MgO | 0-6 |
| CaO | 0-6 |
| SrO | 0-4 |
| BaO | 0-4 |
| $F^-$ | 0-6 |
| $Cl^-$ | 0-0,5 |
| $R_2O$ | 3,5-10 |
| RO | 0-6 |

Die Gläser der vorliegenden Erfindung können $SiO_2$ in einem Anteil von wenigstens 60 Mol% aufweisen. $SiO_2$ trägt zur hydrolytischen Beständigkeit und Transparenz des Glases bei. Bei einem zu hohen Gehalt an $SiO_2$ ist der Schmelzpunkt des Glases zu hoch. Auch die Temperaturen $T_4$ sowie $T_g$ steigen dann stark an. Somit muss der Gehalt an $SiO_2$ auf höchstens 78 Mol% begrenzt werden. Vorzugsweise ist der Gehalt an $SiO_2$ wenigstens 61 Mol%, wenigstens 63 Mol% oder wenigstens 65 Mol%. Der Gehalt kann in Ausführungsformen auf maximal 75 Mol% oder maximal 72 Mol% beschränkt werden.

Die Gläser der vorliegenden Erfindung enthalten $Al_2O_3$ in einem Anteil von maximal 10 Mol%. $Al_2O_3$ trägt zur Entmischungsstabilität der Gläser bei, verringert aber in größeren Anteilen die Säurebeständigkeit. Außerdem erhöht $Al_2O_3$ die Schmelztemperatur und $T_4$. Somit kann der Gehalt an dieser Komponente auf maximal 9 Mol% oder maximal 8 Mol% begrenzt werden. In vorteilhaften Ausführungsformen wird $Al_2O_3$ in einem geringen Anteil von wenigstens 2 Mol%, wenigstens 2,5 Mol% oder wenigstens 3 Mol% oder wenigstens 3,5 Mol% eingesetzt.

Die Gläser der vorliegenden Erfindung können $B_2O_3$ in einem Anteil von wenigstens 12 Mol% enthalten. $B_2O_3$ hat einen vorteilhaften Einfluss auf die Schmelzeigenschaften des Glases, insbesondere wird die Schmelztemperatur gesenkt und das Glas kann bei niedrigeren Temperaturen mit anderen Materialien verschmolzen werden. Der Anteil an $B_2O_3$ sollte aber nicht zu hoch sein, da die Gläser ansonsten stark zu Entmischung neigen. Des Weiteren hat zu viel $B_2O_3$ negative Auswirkungen auf die hydrolytische Beständigkeit und das Glas neigt während der Produktion zu starken Verdampfungsverlusten und somit zu einem Knotenglas. Er kann auf bis zu 24 Mol%, bis zu 22 Mol% oder bis zu 20 Mol% beschränkt werden. In bestimmten Ausführungsformen beträgt der Gehalt an $B_2O_3$ maximal 17 Mol%. Der Gehalt an $B_2O_3$ kann mindestens 12 Mol% oder mindestens 14 Mol% betragen.

In einer bevorzugten Ausführungsform gilt, dass das Verhältnis der Summe der Gehalte (in Mol%) von $B_2O_3$, $R_2O$ und RO zu der Summe der Gehalte (in Mol%) von $SiO_2$ und $Al_2O_3$ maximal 0,4, insbesondere maximal 0,35, mehr bevorzugt maximal 0,33 beträgt. In einer Ausführungsform beträgt dieser Wert wenigstens 0,1, bevorzugt wenigstens 0,2, oder wenigstens 0,26. Gläser mit dem genannten Anteilsverhältnis zeigen gute Eigenschaften hinsichtlich der hydrolytischen Beständigkeit und dem Entmischungsfaktor und sie haben eine nur geringe induzierte Extinktion, was besonders bei Verwendung als UV-durchlässiges Material viele Vorteile hat.

Die Gläser der vorliegenden Erfindung können $Li_2O$ in einem Anteil bis zu 3,0 Mol%, bis zu 2,8 Mol% oder bis zu 2,5 Mol% enthalten. $Li_2O$ erhöht die Schmelzbarkeit der Gläser und hat eine vorteilhafte Verschiebung der UV-Kante zu niedrigeren Wellenlängen zur Folge. Lithiumoxid neigt aber zu Verdampfung, verstärkt die Entmischungstendenz und erhöht außerdem den Gemengepreis. In der bevorzugten Ausführungsform enthält das Glas nur wenig $Li_2O$, z. B. maximal 3,0 Mol%, maximal 2,0 Mol% oder maximal 1,9 Mol% oder das Glas ist frei von $Li_2O$.

Die Gläser der Erfindung enthalten $Na_2O$ in einem Anteil von bis zu 6 Mol%. $Na_2O$ erhöht die Schmelzbarkeit der Gläser. Allerdings führt Natriumoxid auch zu einer Verringerung der UV-Transmission und zu einer Erhöhung des thermischen Ausdehnungskoeffizienten. Das Glas kann $Na_2O$ in einem Anteil von mindestens 1 Mol% oder wenigstens 2 Mol% aufweisen. In einer Ausführungsform beträgt der Gehalt an $Na_2O$ maximal 5 Mol% oder maximal 4 Mol%.

Die Gläser der vorliegenden Erfindung enthalten $K_2O$ in einem Anteil von maximal 4 Mol%. $K_2O$ erhöht die Schmelzbarkeit der Gläser und hat eine vorteilhafte Verschiebung der UV-Kante zu niedrigeren Wellenlängen zur Folge.

Sein Anteil kann wenigstens 0,3 Mol% oder wenigstens 0,75 Mol% betragen. Ein zu hoher Kaliumoxidgehalt führt allerdings durch die strahlende Eigenschaft seines Isotops $^{40}$K zu einem Glas, das beim Einsatz in Photomultipliern störend wirkt. Daher muss der Gehalt dieser Komponente auf höchstens 3 Mol% oder höchstens 2 Mol% begrenzt werden.

In einer Ausführungsform der Erfindung beträgt das Verhältnis der Gehalte von $Na_2O$ zu $K_2O$ in Mol% wenigstens 1,5, insbesondere wenigstens 2. In einer Ausführungsform beträgt das genannte Verhältnis maximal 4, insbesondere maximal 3. Beide Oxide dienen dazu, die Schmelzbarkeit des Glases zu verbessern. Wird aber zu viel $Na_2O$ eingesetzt, verringert sich die UV-Transmission. Zu viel $K_2O$ erhöht den thermischen Ausdehnungskoeffizienten. Es wurde gefunden, dass das angegebene Verhältnis die besten Ergebnisse erzielt, sich also die UV-Transmission und der thermische Ausdehnungskoeffizient in vorteilhaften Bereichen einstellen.

Der Anteil an $R_2O$ in den Gläsern der vorliegenden Erfindung beträgt vorzugsweise höchstens 10 Mol%, höchstens 8 Mol% oder höchstens 7 Mol%. Die Gläser können $R_2O$ in Anteilen von wenigstens 3,5 Mol%, wenigstens 4 Mol% oder wenigstens 4,5 Mol% enthalten. Alkalimetalloxide erhöhen die Schmelzbarkeit der Gläser, führen jedoch wie oben beschrieben in höheren Anteilen zu vielfältigen Nachteilen.

Die Gläser der vorliegenden Erfindung können MgO in einem Anteil von bis zu 4 Mol% oder bis zu 2 Mol% enthalten. MgO ist vorteilhaft für die Schmelzbarkeit, erweist sich jedoch in hohen Anteilen als problematisch hinsichtlich der angestrebten UV-Transmission und der Entmischungsneigung. Bevorzugte Ausführungsformen sind frei von MgO.

Die Gläser der vorliegenden Erfindung können CaO in einem Anteil von bis zu 4 Mol% oder bis zu 2 Mol% enthalten. CaO ist vorteilhaft für die Schmelzbarkeit, erweist sich jedoch in hohen Anteilen als problematisch hinsichtlich der angestrebten UV-Transmission. Bevorzugte Ausführungsformen sind frei von CaO oder enthalten nur wenig CaO, z. B. mindestens 0,1 Mol%, mindestens 0,3 Mol% oder mindestens 0,5 Mol%.

Die Gläser der vorliegenden Erfindung können SrO in einem Anteil von bis zu 4 Mol%, bis zu 1 Mol% oder bis zu 0,5 Mol% enthalten. SrO ist vorteilhaft für die Schmelzbarkeit, erweist sich jedoch in hohen Anteilen als problematisch hinsichtlich der angestrebten UV-Transmission. Bevorzugte Ausführungsformen sind frei von SrO.

Die Gläser der vorliegenden Erfindung können BaO in einem Anteil von bis zu 4 Mol% oder bis zu 2 Mol% enthalten. BaO führt zu einer Verbesserung der hydrolytischen Beständigkeit. Jedoch führt ein zu hoher Bariumoxidgehalt zur Entmischung und damit zur Instabilität des Glases. Bevorzugte Ausführungsformen enthalten BaO in Anteilen von wenigstens 0,1 Mol%, wenigstens 0,3 Mol% oder wenigstens 0,8 Mol%.

Es hat sich gezeigt, dass die Erdalkalioxide RO einen großen Einfluss auf die Entmischungsneigung haben. In einer Ausführungsform wird daher besonders auf die Gehalte dieser Komponenten und deren Verhältnis zueinander geachtet. So sollte das Verhältnis von BaO in Mol% zu der Summe der Gehalte von MgO, SrO und CaO in Mol% mindestens 0,4 betragen. Bevorzugt beträgt dieser Wert wenigstens 0,55, wenigstens 0,7 oder wenigstens 1,0. In besonders bevorzugten Ausführungsformen beträgt der Wert wenigstens 1,5 oder sogar wenigstens 2. BaO bringt hinsichtlich der Entmischung und hydrolytischen Beständigkeit im Vergleich zu den anderen Erdalkalimetalloxiden die meisten Vorteile. Dennoch sollte das genannte Verhältnis einen Wert von 4,0 oder von 3,0 nicht überschreiten. In vorteilhaften Ausführungsformen umfasst das Glas zumindest geringe Mengen an CaO und BaO und ist frei von MgO und SrO.

Vorteilhafte Eigenschaften werden insbesondere erhalten, wenn das Verhältnis des Anteils von CaO in dem Glas zu BaO jeweils in Mol% weniger als 2,0 beträgt. Insbesondere sollte dieses Verhältnis weniger als 1,5 oder weniger als 1,0 betragen. Optimale Verhältnisse sind sogar noch geringer, wie insbesondere weniger als 0,8 oder weniger als 0,6. In einer bevorzugten Ausführungsform beträgt dieses Verhältnis wenigstens 0,3.

In einer Ausführungsform weist das Glas ein Anteilsverhältnis in Mol% von $B_2O_3$ zu BaO von mindestens 8 und höchstens 20 auf. Vorzugsweise beträgt das Verhältnis mindestens 10 oder mindestens 11. In einer bevorzugten Ausführungsform ist das genannte Verhältnis auf höchstens 18, höchstens 16, höchstens 15 oder höchstens 13 beschränkt. Insbesondere beträgt das Verhältnis mindestens 10 und höchstens 15, oder mindestens 11 und höchstens 13. Gläser mit dem genannten Anteilsverhältnis zeigen gute Eigenschaften hinsichtlich der hydrolytischen Beständigkeit und dem Entmischungsfaktor sowie eine nur geringe induzierte Extinktion.

Der Anteil an RO in den Gläsern der vorliegenden Erfindung kann wenigstens 0,3 Mol% betragen. Erdalkalimetalloxide sind vorteilhaft für die Schmelzbarkeit, erweisen sich jedoch in hohen Anteilen als problematisch hinsichtlich der angestrebten UV-Transmission. In einer Ausführungsform enthält das Glas maximal 3 Mol% RO.

Die Summe der Gehalte in Mol% der Erdalkalimetalloxide und Alkalimetalloxide, $RO+R_2O$, kann auf maximal 10 Mol% begrenzt sein. Vorteilhafte Ausführungsformen können diese Komponenten in Mengen von maximal 9 Mol% enthalten. Vorzugsweise beträgt der Gehalt dieser Oxide mindestens 4 Mol%, mindestens 5 Mol% oder mindestens 6 Mol%. Diese Komponenten erhöhen die Entmischungsneigung und verringern in zu hohen Anteilen die hydrolytische Beständigkeit der Gläser.

Das Verhältnis der Gehalte in Mol% von $B_2O_3$ zu der Summe der Gehalte $R_2O$ und RO in Mol% kann wenigstens 1,3, wenigstens 1,5 oder wenigstens 1,8 betragen. Das Verhältnis kann auf maximal 6, maximal 4,5 oder maximal 3 begrenzt sein. Bei der Entmischung des Glases können sich Alkali- oder Erdalkaliborate bilden, wenn zu viel Alkali- bzw. Erdalkalioxid im Verhältnis zum $B_2O_3$ vorliegt. Es hat sich als vorteilhaft erwiesen, das genannte Verhältnis einzustellen.

Damit die Schmelzeigenschaften, inklusive $T_g$ und $T_4$, im gewünschten Bereich liegen, kann es vorteilhaft sein, das Verhältnis des Gehaltes an $B_2O_3$ zu der Summe der Gehalte von $SiO_2$ und $Al_2O_3$ in Mol% in einem engen Bereich einzustellen. In einer vorteilhaften Ausführungsform beträgt dieses Verhältnis wenigstens 0,15 und/oder höchstens 0,4.

Das Verhältnis der Anteile in Mol% der Summe der Alkalimetalloxide $R_2O$ zur Summe der Erdalkalimetalloxide RO liegt bevorzugt bei >1, insbesondere >1,1 oder bei >2. In Ausführungsformen beträgt dieses Verhältnis höchstens 10, höchstens 7 oder höchstens 5.

Die Gläser der vorliegenden Erfindung können $F^-$ in einem Gehalt von 0 bis 6 Mol% enthalten. Bevorzugt beträgt der Gehalt an $F^-$ höchstens 4 Mol%. In einer Ausführungsform wird mindestens 1 Mol% oder wenigstens 2 Mol% dieser Komponente eingesetzt. Die Komponente $F^-$ verbessert die Schmelzbarkeit des Glases und beeinflusst die UV-Kante in Richtung kleinerer Wellenlängen.

Die Gläser der vorliegenden Erfindung können $Cl^-$ in einem Gehalt weniger als 1 Mol%, insbesondere weniger als 0,5 Mol% oder weniger als 0,3 Mol% aufweisen. Geeignete Untergrenzen sind 0,01 Mol% oder 0,05 Mol%.

Wenn es in dieser Beschreibung heißt, das Glas sei frei von einer Komponente oder enthalte eine gewisse Komponente nicht, so ist damit gemeint, dass diese Komponente allenfalls als Verunreinigung vorliegen darf. Das bedeutet, dass sie nicht in wesentlichen Mengen zugesetzt wird. Nicht wesentliche Mengen sind erfindungsgemäß, und wenn für die betreffende Komponente nichts anderes angegeben ist, Mengen von weniger als 500 ppm, bevorzugt weniger als 250 ppm und am meisten bevorzugt weniger als 50 ppm. In einer weiteren Ausführungsform sind nicht wesentliche Mengen erfindungsgemäß Mengen von weniger als 0,5 ppm, bevorzugt weniger als 0,125 ppm und am meisten bevorzugt weniger als 0,05 ppm.

Die Angabe "ppm" bezieht sich in dieser Beschreibung auf Massenanteile.

Eisengehalte werden in dieser Beschreibung als Gewichtsanteile an $Fe_2O_3$ in ppm ausgedrückt. Dieser Wert ist in dem Fachmann geläufiger Weise bestimmbar, indem die Mengen aller im Glas befindlichen Eisen-Spezies bestimmt werden und für die Berechnung des Masseanteils angenommen wird, dass sämtliches Eisen als $Fe_2O_3$ vorliegt. Wird also 1 mmol Eisen im Glas ermittelt, so entspricht die für die Berechnung angenommene Masse 159,70 mg $Fe_2O_3$. Dieses Vorgehen trägt der Tatsache Rechnung, dass die Mengen der einzelnen Eisenspezies in dem Glas nicht zuverlässig bzw. nur mit sehr großem Aufwand bestimmbar sind. In Ausführungsformen enthält das Glas weniger als 100 ppm $Fe_2O_3$, insbesondere weniger als 50 ppm oder weniger als 10 ppm. In einer Ausführungsform mit besonders geringem Eisengehalt, beträgt der Anteil an $Fe_2O_3$ weniger als 6 ppm, weniger als 5 ppm oder weniger als 4,5 ppm. Optional beträgt der Gehalt an $Fe_2O_3$ zwischen 0 und 4,4 ppm, zwischen 0 und 4,0 ppm, zwischen 0 und 3,5 ppm, zwischen 0 und 2,0 ppm, zwischen 0 und 1,75 ppm. In Ausführungsformen kann der Gehalt zwischen 0 und 1,5 ppm, oder bevorzugt zwischen 0 und 1,25 ppm betragen. In einer weiteren Ausführungsform ist das Glas frei von jeglicher Kontamination mit $Fe_2O_3$.

In einer Ausführungsform enthält das Glas weniger als 100 ppm $TiO_2$, insbesondere weniger als 50 ppm oder weniger als 10 ppm. In einer Ausführungsform mit besonders geringem $TiO_2$-Gehalt enthält das Glas weniger als 7 ppm, weniger als 6 ppm, weniger als 5 ppm oder weniger als 4 ppm. Optional beträgt der Gehalt an $TiO_2$ zwischen 0 und 6,9 ppm, zwischen 0 und 5,8 ppm, zwischen 0 und 4,7 ppm, zwischen 0 und 3,8 ppm oder zwischen 0 und 2,5 ppm. In einer Ausführungsform kann der Anteil dieser Komponente zwischen 0 und 1,5 ppm, zwischen 0 und 1,0 ppm, zwischen 0 und 0,75 ppm, zwischen 0 und 0,5 ppm und bevorzugt zwischen 0 bis 0,25 ppm betragen. In einer weiteren Ausführungsform ist das Glas frei von jeglicher Kontamination mit $TiO_2$.

In einer Ausführungsform hat das Glas weniger als 100 ppm Arsen, insbesondere weniger als 50 ppm oder weniger als 10 ppm. Bevorzugt ist ein Glas, das weniger als 100 ppm Antimon, weniger als 50 ppm Antimon oder weniger als 10 ppm Antimon aufweist. Arsen und Antimon sind giftig und umweltgefährlich, außerdem erhöhen beide die Solarisation des Glases.

Wird in dieser Beschreibung unter Bezugnahme auf ein chemisches Element (z. B. As, Sb) angegeben, dass diese Komponente nicht enthalten ist, so bezieht sich diese Aussage, sofern im Einzelfall nichts anderes angegeben ist, auf jegliche chemische Form. Beispielsweise bedeutet die Angabe, das Glas weise einen As-Gehalt von weniger als 100 ppm auf, dass die Summe der Massenanteile der vorhandenen As-Spezies (z. B. $As_2O_3$, $As_2O_5$, etc.) zusammen den Wert von 100 ppm nicht übersteigt.

In einer besonders bevorzugten Ausführungsform umfasst das Borosilicatglas die folgenden Komponenten (in Mol% auf Oxidbasis):

| Komponente | Gehalt (Mol%) |
|---|---|
| $SiO_2$ | 68-73 |
| $Al_2O_3$ | 2-5 |
| $B_2O_3$ | 12-18 |

(fortgesetzt)

| Komponente | Gehalt (Mol%) |
|---|---|
| $Na_2O$ | 1-4 |
| $K_2O$ | 0-2 |
| CaO | >0-2 |
| SrO | 0-1 |
| BaO | 0-4 |
| $F^-$ | 0-6 |

In einer weiteren besonders bevorzugten Ausführungsform umfasst das Glas die folgenden Komponenten in Mol%:

| Komponente | Gehalt (Mol%) |
|---|---|
| $SiO_2$ | 68-73 |
| $Al_2O_3$ | 3-5 |
| $B_2O_3$ | 12-18 |
| $Li_2O$ | 0-2,8 |
| $Na_2O$ | 1-4 |
| $K_2O$ | 0-2 |
| CaO | >0-2 |
| SrO | 0-1 |
| BaO | >0-4 |
| $F^-$ | 0-6 |

In einer Ausführungsform hat das Borosilicatglas einen Brechungsindex $n_d$ von 1,45 bis 1,55. Der Brechungsindex kann weniger als 1,50 betragen.

Das Glas zeichnet sich durch eine ausgezeichnete hydrolytische Beständigkeit aus. Insbesondere hat das Glas eine hydrolytische Klasse nach ISO 719:1989-12 von HGB3 oder besser, insbesondere HGB2 oder HGB1.

In einer Ausführungsform weist das Glas einen Entmischungsfaktor hinsichtlich seiner hydrolytischen Beständigkeit im Bereich von 0,35 bis 1,65 auf, insbesondere von 0,5 bis 1,10. Insbesondere beträgt der Faktor wenigstens 0,65. Vorzugsweise liegt dieser Faktor nahe bei 1,00, was dem Fall einer unveränderten hydrolytischen Beständigkeit nach Entmischung entspricht. In einer Ausführungsform ist der Entmischungsfaktor maximal 1,40, maximal 1,25 oder maximal 1,10. Der Entmischungsfaktor ist ein Maß für die Eigenschaft des Glases, seine hydrolytische Beständigkeit im Sinne der ISO 719 in Folge einer Entmischung zu verändern. Entmischung tritt beim Verschmelzen der Gläser aufgrund des Temperatureinflusses auf. Es hat sich als vorteilhaft erwiesen, Gläser mit einem Entmischungsfaktor möglichst nahe 1 zu wählen, damit nicht durch das Verschmelzen ein Glas erhalten wird, das hinsichtlich seiner hydrolytischen Beständigkeit stark vom Rohglas abweichende Eigenschaften aufweist. Der Entmischungsfaktor wird durch die Zusammensetzung des Glases beeinflusst, aber auch durch seine thermische Vorgeschichte (Kühlzustand). Der Entmischungsfaktor kann über die Abkühlgeschwindigkeit des Glases im Herstellungsprozess eingestellt werden.

Der thermische Ausdehnungskoeffizient der Gläser liegt bevorzugt bei weniger als 4,5 ppm/K. Er kann in einem Bereich von 3,5 bis < 5 ppm/K, weiter bevorzugt von 3,75 bis 4,75 ppm/K, weiter bevorzugt von 4,1 bis 4,6 ppm/K oder von 4,1 bis <4,5 ppm/K liegen.

Bevorzugt liegt die Glasübergangstemperatur $T_g$ unterhalb von 500 °C. Sie kann in einem Bereich von 400 °C bis 550 °C, weiter bevorzugt von 430 °C bis 500 °C, weiter bevorzugt in einem Bereich von 450 °C bis 480 °C liegen.

Die Verarbeitungstemperatur $T_4$ der Gläser der vorliegenden Erfindung liegt bevorzugt bei unter 1200 °C, bevorzugt unter 1125 °C. Sie kann in einem Bereich von 1000 °C bis 1200 °C, weiter bevorzugt in einem Bereich von 1025 °C bis 1175 °C liegen.

Die Gläser dieser Erfindung weisen vorzugsweise ein Produkt CTE $[°C^{-1}]$ x $T_4$ $[°C]$ von maximal 0,0055, insbesondere maximal 0,0053 oder maximal 0,0051 auf. Das Produkt kann mindestens 0,0044 oder mindestens 0,0045 betragen. Es hat sich gezeigt, dass diese Gläser vorteilhafte Eigenschaften hinsichtlich Verschmelzspannung und Einschmelzverhalten zeigen.

Gegenstand der Erfindung ist auch die Verwendung der erfindungsgemäßen Glasartikel als UV-durchlässiges Material. Der erfindungsgemäße Glasartikel wird bevorzugt in Scheiben-, Platten-, Barren-, Pulver-, Rohr- oder Stabform verwendet. Im Falle von Rohren und Stäben können die Glasartikel beispielsweise für die Weiterverarbeitung zu Behältnissen, Fenstern und dergleichen dienen. Jedoch können aus dem erfindungsgemäßen Glas auch diverse andere Formen, wie z. B. Flachgläser oder Glasblöcke und dergleichen hergestellt werden. Flachgläser können beispielsweise nach dem Float-Verfahren hergestellt werden. Rohre und Stäbe können beispielsweise rund, oval, flach oder durch nachträgliche Formung auch noch während des Ziehprozesses in verschiedenster Form hergestellt werden. Runde Stäbe können beispielsweise mit einem Außendurchmesser von etwa 4 bis 17 mm bereitgestellt werden, bevorzugt sind etwa 4 bis 12 mm, besonders bevorzugt etwa 5 bis 10 mm. Rohrgläser können auch nach dem Vello- bzw. A-Zug-Verfahren hergestellt werden. Glasröhren werden beispielsweise mit einem Außendurchmesser von mindestens 3 mm, insbesondere mindestens 5 mm und einer Obergrenze von höchstens 35 mm, insbesondere höchstens 31 mm hergestellt. Besonders bevorzugte Röhrendurchmesser betragen zwischen etwa 10 mm und 29 mm.

Es hat sich gezeigt, dass derartige Röhren eine Wandstärke von mindestens 0,4 mm, insbesondere mindestens 0,5 mm aufweisen können, wobei mindestens 0,6 mm besonders bevorzugt sind. Maximale Wandstärken betragen optional höchstens 1,1 mm, wobei Wandstärken von höchstens 0,9 mm bzw. 0,8 mm bevorzugt sind.

In einer Ausführungsform ist der Glasartikel ein Glaspulver. Das Glaspulver kann als Glasfluss für Emaille-Beschichtungen mit oder ohne Pigmente verwendet werden. Erfindungsgemäße Glasartikel sind auch gesinterte Formkörper, die über Pressen und Brennen oder Schlickerguss und Brennen hergestellt werden. Der Glasartikel kann in Form von UV-transparenten Schichten oder Formkörper bereitgestellt werden.

Besonders bevorzugt werden erfindungsgemäße Glasartikel für bzw. als UV-LED, UV-durchlässige Lampen, Schutzrohre für UV-Lampen, UV-durchlässiges Material für UV-Oxidationsreaktoren, UV-Flammendetektoren, UV-Photozellen, Sonnenreaktoren, Spektralanalysegeräte, Fotomultiplier und für Fenster (insbesondere EPROM-Fenster), Abdeckscheiben für Solarzellen (z. B. im Weltraum), UV-transparente Küvetten (z. B. für Photolumineszenzmessungen mit UV-Anregung), UV-CCL (cold cathode lamps) und/oder Xenon-Blitzlampen verwendet.

In einer Ausführungsform werden die Glasartikel in der Diagnostik verwendet, insbesondere als Mikrofluidikbauteil, z. B. für photolumineszenz-basierte Diagnostikverfahren. Dabei kann wenigstens entweder die Bodenplatte oder die Abdeckplatte aus dem Glas mit erhöhter UV-Transmission bestehen. Durch eine höhere UV-Transmission wird das Signal-zu-Rausch-Verhältnis des Diagnostikverfahrens verbessert.

Besonders bevorzugt ist die Verwendung des Glasartikels für Lampen, die einen besonders hohen Anteil an UV-Strahlung emittieren, insbesondere UV-Lampen mit und ohne Schutzrohr.

Der Glasartikel kann nach an sich bekannten Ziehverfahren für Glasrohre und Stäbe hergestellt werden. Je nach gewünschter Form wird der Fachmann ein geeignetes Herstellungsverfahren wählen, z. B. Barrenguss für Barren und Floaten oder Down Draw für Scheiben. Vorzugsweise wird die Abkühlung des Glases im Verfahren so eingestellt, dass die gewünschte fiktive Temperatur erzielt wird.

In einer Ausführungsform wird der Glasartikel mit dem Vello-Verfahren hergestellt. Bei dem Vello-Verfahren fließt die Glasschmelze vertikal nach unten (in Richtung der Gravitationskraft) durch ein von einem Auslaufring und einer Nadel gebildetes Formgebungswerkzeug. Das Formgebungswerkzeug bildet eine Negativform (Matrize) des erzeugten Querschnitts des Glasrohrs bzw. des Glasstabs. Bei der Herstellung von Glasrohren ist eine Nadel als Formgebungsteil im Zentrum des Formgebungswerkzeugs angeordnet.

Der Unterschied zwischen dem Vello- und dem A-Zug-Verfahren besteht erstens darin, dass die Glasschmelze beim Vello-Verfahren nach dem Austritt aus dem Formgebungswerkzeug in die Horizontale umgelenkt wird und zweitens darin, dass die Nadel beim Vello-Verfahren einen Durchgang aufweist, durch den Blasluft strömt. Die Blasluft sorgt wie bei dem Danner-Verfahren dafür, dass das entstehende Glasrohr nicht zusammenfällt. Bei dem A-Zug-Verfahren wird die erstarrte Glasschmelze ohne vorherige Umlenkung abgetrennt. Da keine Umlenkung erfolgt, kann auch bei der Rohrherstellung auf den Einsatz von Blasluft verzichtet werden.

In einer Ausführungsform weist der Glasartikel wenigstens eine polierte Oberfläche auf. Optional weist der Glasartikel wenigstens eine gefaste Kante auf. Die polierte Oberfläche kann eine Oberflächenrauheit Ra von weniger als 10 nm oder weniger als 5 nm aufweisen. Gefaste Kanten sind stoßfester, insbesondere resistenter gegen Abplatzungen als nicht-gefaste Kanten.

**Thermische und/oder chemische Vorspannung**

Optional umfasst das Herstellungsverfahren den Schritt des chemischen und/oder thermischen Härtens des Glasartikels. Das Härten wird auch als "Vorspannen" bezeichnet.

Vorzugsweise ist der Glasartikel an wenigstens einer Oberfläche vorgespannt, insbesondere thermisch und/oder chemisch vorgespannt. So gibt es beispielsweise die Möglichkeit, Glasartikel, chemisch durch Ionenaustauch vorzuspannen. Hierbei werden üblicherweise kleine Alkaliionen im Artikel durch größere Alkaliionen ausgetauscht. Typisch ist hierbei, dass das kleinere Natrium durch Kalium ersetzt wird. Möglich ist es aber auch, dass das sehr kleine Lithium durch Natrium und/oder Kalium ersetzt wird. Optional ist es möglich, dass Alkaliionen durch Silberionen ersetzt werden. Eine weitere Möglichkeit, ist, dass Erdalkaliionen nach dem gleichen Prinzip wie die Alkaliionen gegeneinander ausgetauscht werden. Bevorzugt findet der Ionenaustausch in einem Bad aus geschmolzenem Salz zwischen der Artikeloberfläche und dem Salzbad statt. Ein solches Bad wird auch als "Vorspannbad" bezeichnet. Zum Austausch können reine Salzschmelzen, beispielsweise geschmolzenes $KNO_3$, eingesetzt werden. Es können aber auch Salzgemische oder Gemische von Salzen mit weiteren Komponenten verwendet werden. Die mechanische Widerstandsfähigkeit eines Artikels kann weiterhin erhöht werden, wenn innerhalb des Artikels ein gezielt eingestelltes Druckvorspannungsprofil aufgebaut wird. Dies kann durch ein- oder auch mehrstufige chemische Austauschprozesse erreicht werden.

Durch den Austausch der kleinen durch große Ionen oder durch thermisches Vorspannen entsteht in der entsprechenden Zone eine Druckspannung, die von der Oberfläche des Glasartikels zur Mitte hin abfällt. Die maximale Druckspannung liegt knapp unter der Glasoberfläche und wird auch mit CS (compressive stress) bezeichnet. CS ist eine Spannung und wird in der Einheit MPa angegeben. Die Tiefe der Druckspannungsschicht wird mit "DoL" abgekürzt und in der Einheit $\mu$m angegeben. Bevorzugt werden CS und DoL mit dem Messgerät FSM-60LE der Firma Orihara gemessen.

In einer Ausführungsform ist CS vorzugsweise größer als 100 MPa. Weiter bevorzugt beträgt CS mindestens 200 MPa, mindestens 250 MPa, oder mindestens 300 MPa. Bevorzugt beträgt CS höchstens 1.000 MPa, höchstens 800 MPa, höchstens 600 MPa, oder höchstens 500 MPa. Bevorzugt liegt CS in einem Bereich von >100 MPa bis 1.000 MPa, von 200 MPa bis 800 MPa, von 250 MPa bis 600 MPa, oder von 300 MPa bis 500 MPa.

In einer Ausführungsform ist der Glasartikel thermisch vorgespannt. Eine thermische Vorspannung wird typischerweise durch eine schnelle Abkühlung der heißen Glasoberfläche erreicht. Thermische Vorspannung hat den Vorteil, dass die Druckspannungsschicht tiefer (größere DoL) ausgebildet sein kann als bei chemischer Vorspannung. Dadurch werden die Gläser weniger kratzempfindlich, da die Druckspannungsschicht mit einem Kratzer nicht so leicht durchdrungen werden kann wie bei einer dünneren Druckspannungsschicht.

Die Gläser bzw. Glasartikel können beispielsweise nach einem Schmelz-, Formgebungs-, Entspannungs-/Kühlprozess sowie Kaltnachverarbeitungsprozessen einem thermischen Vorspannprozess unterworfen werden. Dabei werden Glaskörper (z.B. ein zuvor beschriebener Glasartikel oder ein Vorprodukt), beispielsweise Flachglas, bevorzugt liegend oder hängend in eine Vorrichtung geführt und schnell auf eine Temperatur bis maximal 150°C über die Transformationstemperatur $T_g$ aufgeheizt. Danach werden die Oberflächen des Glaskörpers schnell abgekühlt, beispielsweise durch Anblasen durch ein Düsensystem mit kalter Luft. Infolge des schnellen Abkühlens der Glasoberflächen werden diese in einem aufgeweiteten Netzwerkeingefroren, während sich das Innere der Glaskörper langsam abkühlt und Zeit hat, sich stärker zusammenzuziehen. Dadurch entsteht in der Oberflächenschicht eine Druckspannung und im Inneren eine Zugspannung. Dabei ist die Höhe der Druckvorspannung von verschiedenen Glasparametern wie $CTE_{Glas}$ (mittlerer linearer thermischer Ausdehnungskoeffizient des Glases unterhalb $T_g$), $CTE_{liquid}$ (linearer thermischer Ausdehnungskoeffizient des Glases oberhalb $T_g$), oberer Kühlpunkt, Erweichungspunkt, E-Modul und auch von der Höhe des Wärmeüberganges zwischen Kühlmedium und Glasoberfläche sowie der Dicke der Glaskörper abhängig.

Bevorzugt wird eine Druckvorspannung von mindestens 50 MPa erzeugt. Dadurch kann die Biegefestigkeit der Glaskörper gegenüber nicht vorgespanntem Glas verdoppelt bis verdreifacht werden. In einer Ausführungsform wird das Glas auf eine Temperatur von 750 bis 800°C aufgeheizt und durch Anblasen mit kalter Luft schnell abgekühlt. Der Anblasdruck kann 1 bis 16 kPa betragen. Mit den hierin beschriebenen Gläsern bzw. Glasartikeln werden auf handelsüblichen Luftvorspannanlagen beispielsweise Werte der Druckvorspannung von 50 bis 250 MPa, insbesondere 75 bis 200 MPa erreicht.

In einer Ausführungsform weist der Glasartikel eine Druckspannungsschicht mit einer Druckspannung von wenigstens 50 MPa, insbesondere wenigstens 75 MPa, wenigstens 85 MPa oder wenigstens 100 MPa auf. Der Glasartikel kann an einer, zwei oder allen seinen Oberflächen eine Druckspannungsschicht aufweisen. Die Druckspannung der Druckspannungsschicht kann auf höchstens 250 MPa, höchstens 200 MPa, höchstens 160 MPa oder höchstens 140 MPa begrenzt sein. Diese Druckspannungswerte können insbesondere in thermisch vorgespannten Glasartikeln vorhanden sein.

In einer Ausführungsform beträgt die Tiefe der Druckspannungsschicht des Glasartikels wenigstens 10 $\mu$m, wenigstens 20 $\mu$m, wenigstens 30 $\mu$m, oder wenigstens 50 $\mu$m. In bestimmten Ausführungsformen kann diese Schicht sogar wenigstens 80 $\mu$m, wenigstens 100 $\mu$m oder wenigstens 150 $\mu$m betragen. Optional ist die DoL auf höchstens 2.000 $\mu$m, höchstens 1.500 $\mu$m, höchstens 1.250 $\mu$m oder höchstens 1.000 $\mu$m begrenzt. Die DoL kann insbesondere von 10 $\mu$m bis 2.000 $\mu$m, von 20 $\mu$m bis 1.500 $\mu$m oder von 30 $\mu$m bis 1.250 $\mu$m betragen. In einer Ausführungsform ist der Glasartikel thermisch vorgespannt mit einer DoL von wenigstens 300 $\mu$m, wenigstens 400 $\mu$m oder wenigstens 500 $\mu$m. Optional kann die DoL höchstens 2.000 $\mu$m, höchstens 1.500 $\mu$m oder höchstens 1.250 $\mu$m betragen. In einer Ausführungsform beträgt die DoL von 300 $\mu$m bis 2.000 $\mu$m, von 400 $\mu$m bis 1.500 $\mu$m oder von 500 $\mu$m bis 1.250 $\mu$m.

**Ausführungsformen**

Wie eingangs erläutert, betrifft diese Erfindung ein in mehrfacher Hinsicht resistentes Glas. Besonders resistentes Glas ist insbesondere dort sinnvoll, wo das Glas besonderen Anforderungen ausgesetzt ist. Dies ist beispielsweise in extremen Umgebungen der Fall. Extreme Umgebungen sind insbesondere Einsatzbereiche, in denen es auf besondere Resistenz, Langlebigkeit und Sicherheit ankommt, z.B. Bereiche, die Explosionsschutz erfordern.

In einer Ausführungsform betrifft die Erfindung einen Glasartikel mit besonderer Eignung zum Einsatz in extremen Umgebungen und den folgenden Eigenschaften:

- eine induzierte Extinktion $\alpha(\lambda)$ bei 200 nm nach 48 Stunden Bestrahlung mit einer Deuteriumlampe von maximal 0,300,

- eine induzierte Extinktion $\alpha(\lambda)$ bei 254 nm nach 48 Stunden Bestrahlung mit einer Deuteriumlampe von maximal 0,100,

- eine Dicke von wenigstens 0,3 mm, insbesondere wenigstens 3 mm und/oder bis zu 20 mm, und/oder

- ein thermischer Schrumpf von weniger als 50 $\mu$m/100 mm.

In extremen Umgebungen kann es sinnvoll sein, eine gewisse Mindestdicke für den Glasartikel vorzusehen, da dickere Gläser mechanisch stabiler sind als dünnere Gläser. Dickere Gläser absorbieren allerdings einen größeren Teil der in das Glas eintretenden UV-Strahlung, was zur Entwicklung von Wärme führt. In Umgebungen mit leicht entflammbaren Stoffen kann eine starke Wärmeentwicklung problematisch sein. Ein Glasartikel mit geringer induzierter Extinktion bei 200 nm und/oder 254 nm bietet den Vorteil, dass die Transmission für die betrachteten Wellenlängen auch nach längerem Einsatz hoch bleibt und extreme Wärmeentwicklung vermieden wird.

Erfindungsgemäß ist auch die Verwendung des Glasartikels in einer UV-Lampe zur Desinfektion von Oberflächen in extremen Umgebungen. In einer Ausführungsform wird der Glasartikel in einer UV-Lampe (insbesondere als Abdeckung) eingesetzt, die zur Desinfektionen von einem Wirkort eingesetzt wird. Der Wirkort kann ein Gegenstand sein, der von vielen Menschen berührt wird, z.B. ein Griff, insbesondere ein Türgriff. Dabei kann die UV-Lampe beispielsweise so ausgerichtet sein, dass sie den Wirkort mit UV-Strahlung beaufschlagt. Dabei ist eine gewisse Nähe zum Wirkort nicht zu vermeiden. Entsprechend besteht hier die Gefahr, dass der Glasartikel durch Stöße beschädigt wird. Daraus ergibt sich ein Bedarf an mechanischer Resistenz. Die mechanische Resistenz kann durch eine große Dicke des Glasartikels verbessert werden, wodurch sich allerdings die Transmission des Artikels verringert und die Aufheizung des Glases während des Betriebs der UV-Lampe stark zunimmt. Eine zu starke Aufheizung sollte vermieden werden, was wiederum durch eine sehr gute Transmission und eine geringe induzierte Extinktion positiv beeinflusst wird. Zu hohe Temperaturen beeinträchtigen die Sicherheit durch Gefahr von Verbrennungen des Nutzers oder Explosionen. Grundsätzlich kann die Verbrennungsgefahr durch größeren Abstand verringert werden, was allerdings mit größerer Strahlungsintensität kompensiert werden muss mit dem Nachteil wiederum stärkerer Wärmeentwicklung.

Die Erfindung betrifft auch eine UV-Lampe sowie die Verwendung des Glasartikels in einer UV-Lampe zur Desinfektion, insbesondere in extremen Umgebungen, insbesondere zur Desinfektion von Wirkorten, z.B. die von vielen Menschen berührt werden. Dabei hat es sich als vorteilhaft erwiesen, einen Mindestabstand zwischen der zu desinfizierenden Oberfläche und dem Glasartikel von 5 cm, insbesondere 7,5 cm oder 10 cm einzuhalten. Bei Einsatz des hierin beschriebenen Glasartikels kann insbesondere eine Leistungsdichte von wenigstens 1,0 mW/cm$^2$, wenigstens 1,5 mW/cm$^2$, wenigstens 2,5 mW/cm$^2$, wenigstens 3,0 mW/cm$^2$ oder wenigstens 3,5 mW/cm$^2$ am Wirkort eingestellt werden. Der Wirkort ist die zu desinfizierende Oberfläche. Optional beträgt die Leistungsdichte maximal 20 mW/cm$^2$, maximal 15 mW/cm$^2$ oder maximal 10 mW/cm$^2$. Die Leistungsdichte ist insbesondere die Leistung, die vermittelt durch die UV-Lampe als UV-Strahlung, insbesondere UV-C-Strahlung, am Wirkort messbar ist. Vorzugsweise wird der Wirkort periodisch desinfiziert. Damit ist gemeint, dass der Wirkort nicht andauernd, sondern nur zeitweise bestrahlt wird. Beispielsweise kann ein Bestrahlungsintervall durch Berührung, Anwesenheit oder Betätigung durch den Nutzer ausgelöst werden. Ein Bestrahlungsintervall kann beispielsweise wenigstens 1 Sekunde, wenigstens 5 Sekunden, wenigstens 10 Sekunden oder wenigstens 20 Sekunden betragen. Optional dauert ein Bestrahlungsintervall maximal 10 Minuten, maximal 5 Minuten, maximal 2 Minuten oder maximal 1 Minute.

In einer Ausführungsform weist die UV-Lampe und/oder der Glasartikel einen hitzeoptimierten Aufbau auf. Dabei kann der Glasartikel insbesondere hinsichtlich seiner Dicke und seiner UV-Transmission so gewählt sein, dass bei Bestrahlung eines 70 mm von dem Glasartikel entfernten, auf der gegenüberliegenden Seite der Lichtquelle angeordneten, Wirkortes mit einer Quecksilber-Mitteldruck-Lampe mit 120 W/cm bei einer Bogenlänge von 4 cm (z.B. Philips HOK 4/120) bei einer UVC-Leistungsdichte von 17,27 mW/cm$^2$ am Wirkort für eine Dauer von 5 Sekunden bei einer Umgebungstemperatur von 20°C keine Temperatur an der dem Wirkort zugewandten Seite des Glasartikels 45°C überschreitet. In einer Ausführungsform tritt dabei die Strahlung senkrecht durch den Glasartikel hindurch, d.h. der Eintritt des Lichtes in den Glasartikel erfolgt im Wesentlichen rechtwinklig zu der der Lichtquelle zugewandten Oberfläche und/oder der Lichtaustritt aus dem Glasartikel erfolgt im Wesentlichen rechtwinklig zu der dem Wirkort zugewandten Seite des Glasartikels. Insbesondere überschreitet keine Temperatur einen Wert von 42,5°C, 40°C oder 37,5°C. In einer Ausführungsform werden die genannten Temperaturgrenzwerte auch nach 10 Sekunden, 20 Sekunden, 30 Sekunden, 45 Sekunden, 60 Sekunden, 90 Sekunden, 120 Sekunden, 150 Sekunden oder 180 Sekunden Bestrahlung nicht überschritten. Die beschriebene Eigenschaft beschreibt, wie stark sich der Glasartikel bei senkrechtem Durchstrahlen mit häufig verwendeten UV-Lichtquellen erwärmt. Es wird erreicht, dass eine UV-Lampe mit einer Lampenabdeckung aus dem Glasartikel nicht gefährlich heiß wird. Mit der UVC-Leistungsdichte ist die durch Strahlung im UVC-Bereich (280 bis 200 nm) vermittelte Leistungsdichte gemeint. Quecksilber-Mitteldruck-Lampen emittieren auch Licht anderer Wellenlängen, die hier für die Betrachtung der UVC-Leistungsdichte außer Betracht bleibt. Die Messung wird unter Umgebungsatmosphäre durchgeführt. Zur Klarstellung: die beschriebene Eigenschaft beschränkt weder die UV-Lampe noch die Einsatzmöglichkeit des Glasartikels auf Quecksilber-Mitteldruck-Lampen.

In einer Ausführungsform genügt der Glasartikel den Anforderungen an das Bruchbild gemäß DIN EN 12150-1:2020-07. Dabei kann ein ganzer Artikel oder ein Teil eines Artikels untersucht werden, abweichend von der angegebenen Norm kann der Artikel kleiner sein als dort angegeben, so lange die zu betrachtende Fläche überschritten wird. Die für das Bruchbild zu betrachtende Fläche kann insbesondere 40 mm x 40 mm oder 25 mm x 25 mm betragen. In einer Ausführungsform zerbricht der Glasartikel unter den genannten Bedingungen in nicht weniger als 25 Teile, insbesondere nicht weniger als 30 Teile oder nicht weniger als 40 Teile. Es ist vorteilhaft, dass der Artikel in viele Teile zerbricht, da bei einem Bruch die Verletzungsgefahr bei kleinen Bruchstücken gering ist. Das Bruchbild kann beispielsweise durch die Wahl der Glaszusammensetzung, des Kühlzustandes (thermischer Schrumpf), durch Einstellung von Spannungen im Glas und/oder durch Vorspannen des Artikels beeinflusst werden.

In einer Ausführungsform betrifft die Erfindung einen Glasartikel aus einem Glas mit

- einem Entmischungsfaktor hinsichtlich seiner hydrolytischen Beständigkeit im Bereich von 0,10 bis 1,65,

- einer induzierten Extinktion $\alpha(\lambda)$ bei 200 nm nach 48 Stunden Bestrahlung mit einer Deuteriumlampe von maximal 0,300,

- einer induzierten Extinktion $\alpha(\lambda)$ bei 254 nm nach 48 Stunden Bestrahlung mit einer Deuteriumlampe von maximal 0,100,

- einer Dicke von wenigstens 0,3 mm, insbesondere wenigstens 3 mm und/oder bis zu 20 mm, und

- einem thermischen Schrumpf von weniger als 50 $\mu$m/100 mm.

In einer Ausführungsform betrifft die Erfindung einen Glasartikel aus einem Glas mit

- einem Entmischungsfaktor hinsichtlich seiner hydrolytischen Beständigkeit im Bereich von 0,10 bis 1,65,

- einer Dicke von wenigstens 0,3 mm, insbesondere wenigstens 3 mm und/oder bis zu 20 mm, und

- einer Druckspannung an wenigstens einer Oberfläche von wenigstens 50 MPa.

In einer Ausführungsform betrifft die Erfindung einen Glasartikel aus einem Glas mit

- einem Entmischungsfaktor hinsichtlich seiner hydrolytischen Beständigkeit im Bereich von 0,10 bis 1,65,

- einer Dicke von wenigstens 0,3 mm, insbesondere wenigstens 3 mm und/oder bis zu 20 mm, und

- einer Druckspannung an wenigstens einer Oberfläche von wenigstens 50 MPa und einem Bruchbild gekennzeichnet durch Bruch eines Flächenabschnitts von 40 mm x 40 mm in nicht weniger als 25 Teile.

Figurenbeschreibung

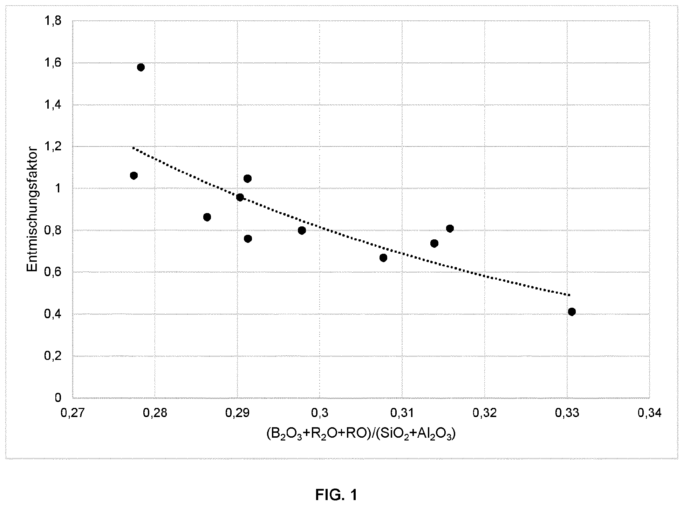

Figur 1 ist eine graphische Darstellung von Wertepaaren beispielhafter Gläser mit dem Entmischungsfaktor auf der Ordinate und dem Verhältnis der Summe der Gehalte (in Mol%) von $B_2O_3$, $R_2O$ und RO zu der Summe der Gehalte (in Mol%) von $SiO_2$ und $Al_2O_3$ auf der Abszisse.

Beispiele

Tabelle 1 zeigt beispielhafte Glaszusammensetzungen in Mol% und weitere Glaseigenschaften.

**Tabelle 1**

| Komponente [Mol%] | 1 | 2 | 3 | 4 | 5 | 6 |
|---|---|---|---|---|---|---|
| $SiO_3$ | 70,07 | 67,85 | 69,04 | 70,03 | 69,70 | 69,26 |
| $Al_2O_3$ | 3,27 | 3,22 | 3,48 | 3,48 | 3,42 | 3,47 |
| $B_2O_3$ | 18,15 | 17,78 | 17,80 | 16,24 | 16,25 | 16,95 |
| $Li_2O$ | 1,55 | 1,55 | 1,48 | 1,68 | 1,67 | 1,49 |
| $Na_2O$ | 2,43 | 2,40 | 2,87 | 2,54 | 2,50 | 2,66 |
| $K_2O$ | 1,02 | 1,01 | 1,22 | 0,95 | 0,94 | 1,03 |
| MgO | | 3,33 | | | | |
| CaO | 0,62 | 0,66 | 0,67 | 0,66 | 1,54 | 0,66 |
| SrO | | | | 0,02 | 0,01 | 0,01 |
| BaO | 0,47 | | 0,50 | 1,40 | 1,07 | 1,28 |
| ZnO | | | | | | |
| $F^-$ | 2,27 | 2,07 | 2,75 | 2,81 | 2,70 | 2,97 |
| $Cl^-$ | 0,14 | 0,13 | 0,18 | 0,19 | 0,19 | 0,21 |
| Summe | **100,00** | **100,00** | **100,00** | **100,00** | **100,00** | **100,00** |
| $\sum R_2O$ | 5,00 | 4,96 | 5,58 | 5,17 | 5,12 | 5,19 |
| $\sum RO$ | 1,09 | 3,99 | 1,17 | 2,07 | 2,62 | 1,96 |
| $\sum R_2O + \sum RO$ | 6,09 | 8,95 | 6,75 | 7,24 | 7,74 | 7,14 |
| $B_2O_3 / \sum R_2O$ | 3,63 | 3,58 | 3,19 | 3,14 | 3,18 | 3,27 |
| $B_2O_3 / \sum RO$ | 16,59 | 4,46 | 15,21 | 7,83 | 6,21 | 8,67 |
| $B_2O_3 / BaO$ | 38,68 | - | 35,34 | 11,63 | 15,21 | 13,23 |
| $B_2O_3 / (\sum RO + \sum R_2O)$ | 2,98 | 1,99 | 2,64 | 2,24 | 2,10 | 2,37 |
| $B_2O_3 / (SiO_3 + Al_2O_3)$ | 0,25 | 0,25 | 0,25 | 0,22 | 0,22 | 0,23 |
| $\sum R_2O / \sum RO$ | 4,57 | 1,24 | 4,77 | 2,50 | 1,95 | 2,65 |
| Transmission @200 nm, *d*=1 mm [%] | 63,7 | | 55,5 | 59,7 | | 59,6 |
| Transmission @254 nm, *d*=1 mm [%] | 87,4 | | 75,5 | 87,8 | | 84,2 |
| CTE [ppm/K] | 4,14 | - | 4,42 | 4,22 | - | 4,37 |
| $T_g$ [°C] | 443 | - | 453 | 467 | - | 465 |
| $T_4$ [°C] | 1085 | - | 1060 | 1090 | - | 1071 |
| $CTE*T_4$ | 0,0045 | - | 0,0047 | 0,0046 | - | 0,0047 |

**Tabelle 2**

| Komponente [Mol%] | 7 | 8 | 9 | 10 | 11 | 12 |
|---|---|---|---|---|---|---|
| $SiO_3$ | 69,00 | 69,85 | 70,27 | 68,80 | 70,27 | 69,94 |
| $Al_2O_3$ | 3,44 | 3,43 | 3,51 | 3,37 | 3,30 | 4,82 |
| $B_2O_3$ | 17,44 | 18,06 | 18,25 | 17,05 | 17,83 | 15,86 |

(fortgesetzt)

| Komponente [Mol%] | 7 | 8 | 9 | 10 | 11 | 12 |
|---|---|---|---|---|---|---|
| $Li_2O$ | 1,67 | 1,44 | 1,67 | 1,48 | | 1,62 |
| $Na_2O$ | 2,69 | 2,46 | 2,45 | 3,10 | 3,14 | 2,65 |
| $K_2O$ | 1,05 | 0,97 | 0,97 | 1,69 | 1,76 | 1,26 |
| MgO | | | | | | |
| CaO | 1,12 | | 0,67 | 0,62 | 0,63 | 0,63 |
| SrO | 0,01 | | | | | |
| BaO | 0,65 | 0,49 | | 0,49 | 0,48 | 0,48 |
| ZnO | | 0,62 | | | | |
| $F^-$ | 2,75 | 2,53 | 2,13 | 3,17 | 2,45 | 2,61 |
| $Cl^-$ | 0,17 | 0,14 | 0,09 | 0,23 | 0,14 | 0,14 |
| Summe | 100,00 | 100,00 | 100,00 | 100,00 | 100,00 | 100,00 |
| $\sum R_2O$ | 5,41 | 4,88 | 5,09 | 6,27 | 4,90 | 5,53 |
| $\sum RO$ | 1,78 | 0,49 | 0,67 | 1,12 | 1,11 | 1,11 |
| $\sum R_2O + \sum RO$ | 7,19 | 5,37 | 5,76 | 7,38 | 6,01 | 6,63 |
| $B_2O_3 / \sum R_2O$ | 3,22 | 3,70 | 3,58 | 2,72 | 3,64 | 2,87 |
| $B_2O_3 / \sum RO$ | 9,78 | 36,89 | 27,39 | 15,29 | 16,06 | 14,30 |
| $B_2O_3 / BaO$ | 26,67 | 36,89 | - | 34,48 | 37,08 | 32,85 |
| $B_2O_3 / (\sum RO + \sum R_2O)$ | 2,42 | 3,37 | 3,17 | 2,31 | 2,97 | 2,39 |
| $B_2O_3 / (SiO_3 + Al_2O_3)$ | 0,24 | 0,25 | 0,25 | 0,24 | 0,24 | 0,21 |
| $\sum R_2O / \sum RO$ | 3,04 | 9,96 | 7,64 | 5,62 | 4,41 | 4,98 |
| Transmission @200 nm, $d$=1 mm [%] | - | 58,7 | 62,7 | 55,5 | 55,4 | 60,5 |
| Transmission @254 nm, $d$=1 mm [%] | - | 86,2 | 84,8 | 76,1 | 84,9 | 87,1 |
| CTE [ppm/K] | - | 4,16 | 4,14 | 4,72 | 4,49 | 4,4 |
| $T_g$ [°C] | - | 447 | 448 | 453 | 459 | 475 |
| $T_4$ [°C] | - | 1094 | 1106 | 1035 | 1117 | 1152 |
| $CTE*T_4$ | - | 0,0046 | 0,0046 | 0,0049 | 0,0050 | 0,0051 |

**Tabelle 3**

| Komponente [Mol%] | 13 | 14 | 15 | 16 | 17 | 18 |
|---|---|---|---|---|---|---|
| $SiO_3$ | 70,19 | 69,74 | 70,93 | 70,57 | 70,42 | 69,99 |
| $Al_2O_3$ | 4,81 | 4,29 | 3,28 | 3,83 | 3,31 | 3,51 |
| $B_2O_3$ | 15,86 | 16,02 | 16,00 | 14,28 | 15,91 | 16,02 |
| $Li_2O$ | 1,62 | 1,61 | 1,58 | 1,62 | 1,61 | 1,66 |
| $Na_2O$ | 2,43 | 2,41 | 2,35 | 2,39 | 2,43 | 2,51 |
| $K_2O$ | 1,03 | 1,02 | 1,32 | 1,50 | 1,28 | 0,94 |
| MgO | | | | | | |
| CaO | 1,13 | 0,63 | 0,11 | 0,89 | 0,67 | 0,66 |

(fortgesetzt)

| Komponente [Mol%] | 13 | 14 | 15 | 16 | 17 | 18 |
|---|---|---|---|---|---|---|
| SrO | | 0,02 | 0,02 | 0,02 | 0,01 | 0,02 |
| BaO | 0,48 | 1,49 | 1,45 | 1,46 | 1,22 | 1,40 |
| ZnO | | | | | | |
| F⁻ | 2,35 | 2,60 | 2,75 | 3,18 | 2,90 | 3,07 |
| Cl⁻ | 0,11 | 0,17 | 0,21 | 0,27 | 0,23 | 0,23 |
| Summe | 100,00 | 100,00 | 100,00 | 100,00 | 100,00 | 100,00 |
| $\sum R_2O$ | 5,07 | 5,04 | 5,25 | 5,51 | 5,32 | 5,11 |
| $\sum RO$ | 1,61 | 2,14 | 1,58 | 2,37 | 1,90 | 2,07 |
| $\sum R_2O + \sum RO$ | 6,68 | 7,18 | 6,83 | 7,88 | 7,23 | 7,18 |
| $B_2O_3 / \sum R_2O$ | 3,13 | 3,18 | 3,05 | 2,59 | 2,99 | 3,14 |
| $B_2O_3 / \sum RO$ | 9,86 | 7,49 | 10,15 | 6,03 | 8,36 | 7,72 |
| $B_2O_3 / BaO$ | 33,13 | 10,77 | 11,04 | 9,75 | 13,04 | 11,46 |
| $B_2O_3 / (\sum RO + \sum R_2O)$ | 2,37 | 2,23 | 2,34 | 1,81 | 2,20 | 2,23 |
| $B_2O_3 / (SiO_3 + Al_2O_3)$ | 0,21 | 0,22 | 0,22 | 0,19 | 0,22 | 0,22 |
| $\sum R_2O / \sum RO$ | 3,15 | 2,36 | 3,33 | 2,33 | 2,80 | 2,46 |
| Transmission @200 nm, $d$=1 mm [%] | 60,8 | 60,8 | 43,8 | 10,5 | 30,7 | 50,9 |
| Transmission @254 nm, $d$=1 mm [%] | 87,1 | 85,4 | 84,9 | 51,9 | 77,0 | 83,8 |
| CTE [ppm/K] | 4,18 | 4,28 | 4,25 | 4,46 | 4,28 | 4,23 |
| $T_g$ [°C] | 471 | 470 | 451 | 473 | 463 | 459 |
| $T_4$ [°C] | 1164 | 1122 | 1097 | 1109 | 1086 | 1092 |
| CTE*$T_4$ | 0,0049 | 0,0048 | 0,0047 | 0,0049 | 0,0046 | 0,0046 |

**Tabelle 4**

| Komponente [Mol%] | 19 | 20 | 21 | 22 | 23 | 24 |
|---|---|---|---|---|---|---|
| $SiO_3$ | 71,33 | 71,88 | 70,92 | 71,20 | 71,85 | 71,01 |
| $Al_2O_3$ | 4,15 | 3,91 | 4,17 | 3,97 | 4,16 | 3,94 |
| $B_2O_3$ | 14,37 | 14,21 | 14,15 | 14,24 | 14,17 | 14,60 |
| $Li_2O$ | 1,66 | 1,57 | 1,85 | 1,72 | 1,26 | 1,71 |
| $Na_2O$ | 2,34 | 2,36 | 2,66 | 2,98 | 3,05 | 2,67 |
| $K_2O$ | 1,23 | 1,06 | 1,21 | 1,07 | 1,06 | 1,06 |
| MgO | | | | | | |
| CaO | 0,74 | 0,56 | 0,74 | 0,56 | 0,56 | 0,56 |
| SrO | 0,01 | 0,01 | 0,01 | 0,02 | 0,01 | 0,02 |
| BaO | 1,25 | 1,25 | 1,24 | 1,25 | 1,03 | 1,22 |
| ZnO | | | | | | |
| F⁻ | 2,72 | 3,03 | 2,81 | 2,77 | 2,65 | 2,99 |
| Cl⁻ | 0,20 | 0,16 | 0,23 | 0,23 | 0,19 | 0,23 |

(fortgesetzt)

| Komponente [Mol%] | 19 | 20 | 21 | 22 | 23 | 24 |
|---|---|---|---|---|---|---|
| Summe | 100,00 | 100,00 | 100,00 | 100,00 | 100,00 | 100,00 |
| $\sum$ R$_2$O | 5,23 | 5,00 | 5,72 | 5,76 | 5,37 | 5,43 |
| $\sum$ RO | 2,01 | 1,82 | 2,00 | 1,82 | 1,61 | 1,80 |
| $\sum$ R$_2$O + $\sum$ RO | 7,23 | 6,82 | 7,71 | 7,59 | 6,98 | 7,23 |
| B$_2$O$_3$ / $\sum$ R$_2$O | 2,75 | 2,84 | 2,48 | 2,47 | 2,64 | 2,69 |
| B$_2$O$_3$ / $\sum$ RO | 7,16 | 7,80 | 7,09 | 7,81 | 8,82 | 8,12 |
| B$_2$O$_3$ / BaO | 11,48 | 11,37 | 11,37 | 11,41 | 13,72 | 11,93 |
| B$_2$O$_3$ / ($\sum$ RO + $\sum$ R$_2$O) | 1,99 | 2,08 | 1,83 | 1,88 | 2,03 | 2,02 |
| B$_2$O$_3$ / (SiO$_3$ + Al$_2$O$_3$) | 0,19 | 0,19 | 0,19 | 0,19 | 0,19 | 0,19 |
| $\sum$ R$_2$O / $\sum$ RO | 2,61 | 2,74 | 2,86 | 3,16 | 3,35 | 3,02 |
| Transmission @200 nm, $d$=1 mm [%] | 64,6 | 62,7 | 54,4 | 63,0 | 64,5 | 61,2 |
| Transmission @254 nm, $d$=1 mm [%] | 87,4 | 86,2 | 79,9 | 84,4 | 86,1 | 86,4 |
| CTE [ppm/K] | 4,22 | 4,1 | 4,38 | 4,36 | 4,3 | 4,29 |
| T$_g$ [°C] | 469 | 468 | 469 | 466 | 466 | 462 |
| T$_4$[°C] | 1121 | 1135 | 1101 | 1099 | 1137 | 1110 |
| CTE*T$_4$ | 0,0047 | 0,0047 | 0,0048 | 0,0048 | 0,0049 | 0,0048 |

Die nachfolgende Tabelle 5 zeigt den Entmischungsfaktor für einige der hier gelisteten Gläser.

**Tabelle 5**

|  | 1 | 17 | 20 | 21 | 22 |
|---|---|---|---|---|---|
| B$_2$O$_3$/BaO | 38,68 | 13,04 | 11,37 | 11,37 | 11,41 |
| Entmischungsfaktor | 0,4122 | 0,7391 | 1,0625 | 1,0476 | 0,9583 |

Die nachfolgende Tabelle 6 zeigt die Solarisationsresistenz (induzierte Extinktion) von Gläsern bei 200 nm bzw. 254 nm nach 48 Stunden bzw. 96 Stunden Bestrahlung mit einer Deuteriumlampe. Die Transmission wurde jeweils bei einer Glasdicke im Bereich von 0,70 bis 0,75 mm gemessen.

**Tabelle 6**

| induzierte Extinktion | 1 | 15 | 19 | 20 | 22 | 24 |
|---|---|---|---|---|---|---|
| 200nm, 48h | 0,070 | 0,129 | 0,053 | 0,031 | 0,022 | 0,018 |
| 200nm, 96h | 0,154 | 0,180 | 0,095 | 0,031 | 0,030 | 0,038 |
| 254nm, 48h | 0,025 | 0,039 | 0,015 | 0,008 | 0,008 | 0,006 |
| 254nm, 96h | 0,062 | 0,063 | 0,032 | 0,010 | 0,013 | 0,007 |

Die folgende Tabelle 7 zeigt gerundete Transmissionswerte einiger Gläser nach Bestrahlung mit einer Deuteriumlampe für 48 h bzw. 96 h.

**Tabelle 7**

| Transmission [%] | 1 | 18 | 19 | 20 | 22 | 24 |
|---|---|---|---|---|---|---|
| 200nm, 48h | 63,5 | 53,7 | 65,8 | 67,4 | 68,5 | 66,4 |

(fortgesetzt)

| Transmission [%] | 1 | 18 | 19 | 20 | 22 | 24 |
|---|---|---|---|---|---|---|
| 200nm, 96h | 58,4 | 54,7 | 63,1 | 67,4 | 67,9 | 65,1 |
| 254nm, 48h | 85,4 | 82,0 | 87,4 | 86,8 | 87,4 | 86,9 |
| 254nm, 96h | 82,3 | 81,8 | 85,9 | 86,6 | 87,0 | 86,8 |

Die nachfolgenden Tabellen zeigen die Verschmelzspannungen, die nach dem Verschmelzen von Glasartikeln mit einem Glas bzw. mit einer Metalllegierung (Kovar) erhalten wurden. Das Glas hatte einen CTE von 5,0 ppm/K; die Metalllegierung hatte einen CTE von 5,4 ppm/K.

**Tabelle 8**

| Verschmelzspannung | 1 | 15 | 16 | 17 | 18 | 19 |
|---|---|---|---|---|---|---|
| Glas, 5,0 ppm/K [nm/cm] | 124 | 158 | 119 | 153 | 173 | 225 |
| Kovar, 5,4 ppm/K [nm/cm] | -261 | -221 | -177 | -194 | -229 | -342 |

**Tabelle 9**

| Verschmelzspannung | 20 | 21 | 22 | 23 | 24 |
|---|---|---|---|---|---|
| Glas, 5,0 ppm/K [nm/cm] | 261 | 109 | 103 | 211 | 146 |
| Kovar, 5,4 ppm/K [nm/cm] | -370 | -229 | -224 | -316 | -266 |

**Patentansprüche**

1. Glasartikel aus einem Glas mit einem Entmischungsfaktor hinsichtlich seiner hydrolytischen Beständigkeit im Bereich von 0,10 bis 1,65.

2. Glasartikel nach Anspruch 1, mit einer induzierten Extinktion $\alpha(\lambda)$ von maximal 0,300 bei 200 nm nach 48 Stunden und/oder nach 96 Stunden Bestrahlung mit einer Deuteriumlampe.

3. Glasartikel nach Anspruch 1 oder 2, wobei das Glas ein Anteilsverhältnis in Mol% von $B_2O_3$ zu BaO von mindestens 8 und höchstens 20, insbesondere mindestens 10 und höchstens 15, aufweist.

4. Glasartikel nach wenigstens einem der vorhergehenden Ansprüche, wobei das Glas eine hydrolytische Klasse nach ISO 719:1989-12 von HGB3, HGB2 oder HGB1 aufweist.

5. Glasartikel nach wenigstens einem der vorhergehenden Ansprüche, wobei der Glasartikel eine Verschmelzspannung

   mit einem Metall oder einer Metalllegierung mit einem thermischen Ausdehnungskoeffizienten von 5,4 ppm/K im Bereich von -400 bis -130 nm/cm und/oder
   mit einem Glas mit einem thermischen Ausdehnungskoeffizienten von 5,0 ppm/K im Bereich von >0 bis 300 nm/cm aufweist.

6. Glasartikel nach wenigstens einem der vorhergehenden Ansprüche

   - mit einer Transmission von mindestens 70% bei 254 nm gemessen bei einer Probendicke von 1 mm und/oder von mindestens 40% bei 200 nm gemessen bei einer Probendicke von 1 mm,
   - wobei das Glas ein Verhältnis der Transmission bei 254 nm zu der Transmission bei 200 nm (jeweils gemessen bei der Probendicke von 1 mm) von mindestens 1,00 und höchstens 2,00, insbesondere höchstens 1,65 aufweist,
   - wobei der Glasartikel eine Dicke von wenigstens 5 mm, wenigstens 6 mm oder wenigstens 8 mm aufweist, und/oder

- wobei der Glasartikel eine Dicke von bis zu 20 mm, bis zu 16 mm, bis zu 14 mm oder bis zu 12 mm aufweist.

7. Glasartikel nach wenigstens einem der vorhergehenden Ansprüche, wobei

- das Glas ein Verhältnis des Anteils von CaO in dem Glas zu BaO jeweils in Mol% von weniger als 2,0 aufweist, und/oder
- wobei das Verhältnis der Summe der Gehalte (in Mol%) von $B_2O_3$, $R_2O$ und RO zu der Summe der Gehalte (in Mol%) von $SiO_2$ und $Al_2O_3$ von 0,1 bis 0,4 beträgt.

8. Glasartikel nach wenigstens einem der vorhergehenden Ansprüche, wobei das Glas die folgenden Komponenten umfasst (in Mol% auf Oxidbasis):

| Komponente | Gehalt (Mol%) |
|---|---|
| $SiO_2$ | 68-73 |
| $Al_2O_3$ | 2-5 |
| $B_2O_3$ | 12-18 |
| $Na_2O$ | 1-4 |
| $K_2O$ | 0-2 |
| CaO | >0-2 |
| SrO | 0-1 |
| BaO | 0-4 |
| $F^-$ | 0-6 |

9. Glasartikel nach wenigstens einem der vorhergehenden Ansprüche, wobei das Glas die folgenden Komponenten umfasst (in Mol% auf Oxidbasis):

| Komponente | Gehalt (Mol%) |
|---|---|
| $SiO_2$ | 68-73 |
| $Al_2O_3$ | 3-5 |
| $B_2O_3$ | 12-18 |
| $Li_2O$ | 0-2,8 |
| $Na_2O$ | 1-4 |
| $K_2O$ | 0-2 |
| CaO | >0-2 |
| SrO | 0-1 |
| BaO | >0-4 |
| $F^-$ | 0-6 |

10. Glasartikel nach wenigstens einem der vorhergehenden Ansprüche, wobei das Glas

- einen thermischen Ausdehnungskoeffizienten in einem Bereich von 3,5 bis < 5 ppm/K aufweist, und/oder
- ein Produkt CTE $[°C^{-1}] \times T_4$ [°C] von maximal 0,0055 aufweist.

11. Glasartikel nach wenigstens einem der vorhergehenden Ansprüche, mit einer induzierten Extinktion von maximal 0,100 bei 254 nm nach 48 Stunden und/oder nach 96 Stunden Bestrahlung mit einer Deuteriumlampe.

12. Glasartikel nach wenigstens einem der vorhergehenden Ansprüche, wobei das Glas

- einen Anteil an $R_2O$ von höchstens 10 Mol% aufweist,
- einen Entmischungsfaktor hinsichtlich seiner hydrolytischen Beständigkeit von wenigstens 0,35 aufweist,
- Erdalkalimetalloxide und Alkalimetalloxide, RO+$R_2O$, in einem Gehalt von zusammen maximal 10 Mol% aufweist,
- das Verhältnis von BaO in Mol% zu der Summe der Gehalte von MgO, SrO und CaO in Mol% mindestens 0,4 beträgt,
- $F^-$ in einem Gehalt wenigstens 1 Mol% enthält, und/oder
- ein Verhältnis des Gehalts an $Na_2O$ zu $K_2O$ in Mol% von wenigstens 1,5 aufweist.

13. Glasartikel nach wenigstens einem der vorhergehenden Ansprüche, wobei wenigstens eine Oberfläche des Artikels thermisch oder chemisch vorgespannt ist, insbesondere mit einer Druckspannung von wenigstens 50 MPa und/oder einer Tiefe der Druckspannungsschicht von mindestens 10 μm.

14. Glasartikel nach wenigstens einem der vorhergehenden Ansprüche, mit einem Bruchbild **gekennzeichnet durch** Bruch eines Flächenabschnitts von 40 mm x 40 mm in nicht weniger als 25 Teile, ermittelt gemäß DIN EN 12150-1.

15. Glasartikel nach wenigstens einem der vorhergehenden Ansprüche, wobei der Glasartikel ein Stab, Barren, Pulver, eine Scheibe, Platte oder ein Rohr ist.

16. Verwendung eines Glasartikels nach wenigstens einem der vorhergehenden Ansprüche als bzw. für UV-LED, UV-durchlässige Lampen, Schutzrohre für UV-Lampen, UV-durchlässiges Material für UV-Oxidationsreaktoren, UV-Flammendetektoren, UV-Photozellen, Sonnenreaktoren, Spektralanalysegeräte, Fotomultiplier und für Fenster (insbesondere EPROM-Fenster), Abdeckscheiben für Solarzellen (z. B. im Weltraum) und/oder UV-transparente Küvetten (z. B. für Photolumineszenzmessungen mit UV-Anregung), Glasfluss für Emaille-Beschichtungen, UV-transparente Schicht, UV-transparente Formkörper, Mikrofluidikbauteil (z. B. für photolumineszenz-basierte Diagnostikverfahren), UV-CCL (cold cathode lamps) und/oder Xenon-Blitzlampen.

17. Verwendung eines Glasartikels nach wenigstens einem der vorhergehenden Ansprüche in einer UV-Lampe zur Desinfektion eines Wirkorts mit

- einem Abstand zwischen der zu desinfizierenden Oberfläche und dem Glasartikel von wenigstens 5 cm, insbesondere wenigstens 7,5 cm oder wenigstens 10 cm,
- einer Leistungsdichte am Wirkort von wenigstens 2,5 mW/cm$^2$, wenigstens 3,0 mW/cm$^2$ oder wenigstens 3,5 mW/cm$^2$,
- einer Leistungsdichte am Wirkort von maximal 20 mW/cm$^2$, maximal 15 mW/cm$^2$ oder maximal 10 mW/cm$^2$,
- einem Bestrahlungsintervall des Wirkorts von wenigstens 1 Sekunde, wenigstens 5 Sekunden, wenigstens 10 Sekunden oder wenigstens 20 Sekunden, und/oder
- einem Bestrahlungsintervall des Wirkorts von maximal 10 Minuten, maximal 5 Minuten, maximal 2 Minuten oder maximal 1 Minute.

18. Verwendung eines Glasartikels nach Anspruch 17 oder Glasartikel nach einem der Ansprüche 1 bis 15, wobei die Dicke des Glasartikels und die UV-Transmission des Glasartikels so aufeinander abgestimmt sind, dass bei Bestrahlung eines 70 mm von dem Glasartikel entfernten, auf der gegenüberliegenden Seite der Lichtquelle angeordneten, Wirkortes mit einer Quecksilber-Mitteldruck-Lampe mit 120 W/cm bei einer Bogenlänge von 4 cm bei einer UVC-Leistungsdichte von 17,27 mW/cm$^2$ am Wirkort für eine Dauer von 5 Sekunden bei einer Umgebungstemperatur von 20°C keine Temperatur an der dem Wirkort zugewandten Seite des Glasartikels 45°C überschreitet.

FIG. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009036063 B3
- DE 4338128 C1
- JP 2015193521 A
- JP 2018131384 A
- JP 2018131385 A
- US 7358206 B2
- US 20180057393 A1
- JP S60200842 A
- JP S60021830 A
- US 5277946 A
- CN 104591539 A
- US 20180339932 A1